# EUROPEAN PATENT SPECIFICATION

(11) **EP 1 368 980 B1**
(45) Date of publication and mention of the grant of the patent: **11.04.2007**
(21) Application number: 01980505.0
(22) Date of filing: 22.10.2001
(51) Int. Cl.: H04Q 7/38

(54) **METHOD FOR ASSIGNING VALUES OF SERVICE ATTRIBUTES TO TRANSMISSIONS, RADIO ACCESS NETWORKS AND NETWORK ELEMENTS**
VERFAHREN ZUM ZUTEILEN VON DIENSTPARAMETERWERTEN AN ÜBERTRAGUNGEN, FUNKZUGANGSNETZE UND NETZWERKELEMENTE
PROCEDE POUR ATTRIBUER DES VALEURS D'ATTRIBUTS DE SERVICES AUX TRANSMISSIONS, RESEAUX A ACCES RADIO ET ELEMENTS DE RESEAU

(30) Priority: 14.03.2001 US 808616
(43) Date of publication of application: 10.12.2003
(73) Proprietor: Nokia Corporation, 02150 Espoo (FI)
(72) Inventor: IMMONEN, Jukka, FI-02730 Espoo (FI); ALA-LAURILA, Juha, FIN-33210 Tampere (FI); JOUPPI, Jarkko, Fin-33710 Tampere (FI); KALLIOKULJU, Juha, FIN-37470 Vesilahti (FI); VIRTANEN, Kari, O., FIN-33240 Tampere (FI); HAUMONT, Serge, FIN-00320 Helsinki (FI); HARTALA, Sami, FI-00820 Helsinki (FI); HURTTA, Tuija, FIN-02660 Espoo (FI)
(74) Representative: Schippan, Ralph
(86) International application number: PCT/EP2001/012180
(87) International publication number: WO 2002/073998

(56) References cited:
- EP-A- 0 946 008
- EP-A- 0 969 683
- EP-A- 0 973 352
- WO-A-01/28160
- "3GPP TS 23.107 V3.4.0; 3rd Generation Partnership Project; Technical Specification Group Services and System Aspects; QoS concept and Architecture (Release 1999)" 3GPP, October 2000 (2000-10), pages 1-35, XP002213783
- "3GPP TS 23.060 V3.4.0; 3rd Generation Partnership Project; Technical Specification Group Services and System Aspects; General Packet Radio Services (GPRS); Service description; Stage 2 (Release 1999)" 3GPP, July 2000 (2000-07), XP002213784

## Description

### FIELD OF THE INVENTION

The invention relates to a method for assigning values of service attributes to transmissions between a user equipment and a radio access network. The invention equally relates to such radio access networks and to network elements of such networks.

### BACKGROUND OF THE INVENTION

Radio access networks enable wireless transmissions of information to and from user equipment. Each transmission is carried out with a variety of service attributes of values that have to be determined for the transmission. The term radio access network is used in this document to denote a complete network that can be accessed by radio connections, e.g. a whole cellular network, the core network parts inclusive.

In future radio access networks, sophisticated service control mechanisms, like the control of the Quality of Service (QoS) provided for each transmission, can play an important role. Such service control mechanism can be used for differentiating between different applications, like real-time versus non-real-time applications, or between different user groups, e.g. business versus low-budget users. In 3G (3^{rd} generation) networks, the provision of a certain QoS and a QoS-based billing is an inherent part of the service models. Service control mechanisms are realized by varying the values of attributes used for a transmission.

A customer can register user equipment for a specific radio access network. In order to enable service control mechanisms, in addition a subscriber specific service profile has to be agreed upon. Such a service profile defines e.g. the quality of service that is allowed or guaranteed for transmissions between the user equipment and the network, and depends usually on what the customer is willing to pay for these transmissions. More specifically, the subscribed service profile contains or refers to values of different service attributes that characterize the quality of a transmission. The values defined by the subscribed service profile can be used for all transmissions to and from the respective user equipment. Alternatively, the user equipment is allowed to request for each transmission values for the required service attributes that are below or equal to the level of the subscribed values of attributes. For the case that a transmission is requested without explicit indication of desired values for the required service attributes, default attributes have to be provided.

There is a considerable number of service attributes that may have to be determined for each connection. For UMTS (Universal Mobile Telecommunications System), QoS attributes have been specified in 3GPP TS 23.107 V3.4.0 (2000-07): "3rd Generation Partnership Project; Technical Specification Group Services and System Aspects; QoS Concept and Architecture; Release 1999". All transmissions are distributed to four different classes of traffic, a conversational class, a streaming class, an interactive class and a background class. The main distinguishing factor between these classes is how delay sensitive the traffic is. The conversational class is meant for traffic which is very delay sensitive while the background class is the most delay insensitive traffic class. Conversational class and streaming class are mainly intended to be used to carry real-time traffic flows. An example for conversational class traffic is voice and an example for streaming class traffic is streaming video. Interactive class and background class are mainly intended to be used to carry non-real-time traffic flows. An example for interactive class traffic is web browsing and an example for background class traffic is background download of emails. The standard defines which attributes have to be defined for which class and also gives value ranges for the different service attributes.

According to the standard, for each of the four classes the maximum bitrate, the delivery order, the maximum SDU (Service Data Unit) size, the SDU error ratio, the residual BER (Bit Error Ratio), the delivery of erroneous SDUs, and the allocation/retention priority have to be fixed. An indication of the traffic class itself also forms one of the attributes required for all classes. For the conversational class and the streaming class an SDU format information, a transfer delay and a guaranteed bitrate have to be determined in addition. For the interactive class a traffic handling priority (THP) has to be determined in addition.

All subscribed attributes are currently stored together with other information in the HLR/HSS (Home Location Register /Home Subscriber Server) of the user equipment in the radio access network with which the user equipment is registered. The mentioned UMTS standard does not clearly define, however, how the QoS attributes stored in the HLR/HSS are to be taken in to account when deciding the attribute set that is to be used for a specific connection. The standard only specifies that one QoS profile is stored for each customer subscription. The user equipment can then request specific values of service attributes, the subscribed profile defining the upper limits for the provided service. To be able to use services with a high transmission quality, a user has therefore to subscribe a QoS profile with values of service attributes that enable a high quality.

The standard proposes to use the subscribed profile as well as default QoS profile. The disadvantage of such an approach is that even if a customer does not require any specific values of attributes for some traffic stream, a possibly high subscribed QoS profile is used without need.

Another problem arises from an approach proposed in UMTS standard, 3G TS 23.060, version 3.4.0. According to this standard it is possible for user equipment to leave some of the QoS attributes undefined in a PDP (Packet Data Protocol) context activation. However, the standard does not define any functionality that would enable a network to intelligently evaluate the user-defined QoS attributes when determining the rest of the attributes. The missing attributes are simply fetched from HLR/HSS, which is also described in the technical specification 3GPP 24.008 V3.4.0: "Mobile Radio Interface Layer 3 specification; Core Network Protocols; Stage 3, Release 1999". This may lead to a situation where there is a conflict between the requested and the fetched QoS attributes. Such a conflict is given for example, if a very low delay is requested by the user equipment, which is essential for real-time traffic, and a very good subscribed packet error rate, which would only be essential for non-real-time traffic, is fetched from the HLR/HSS. Such a combination of attributes is impossible to implement. Since the radio network controller (RNC), which controls the actual transmission between a user equipment and a node B of an UTRAN (UMTS terrestrial radio access network), is not able to negotiate QoS parameters, a requested PDP context will be rejected even if only slightly incorrect parameters are set by the SGSN. In addition, the subscribed QoS parameters may not contain all needed QoS parameters, e.g. if a subscribed traffic class is 'conversational', a required service attribute traffic handling priority may not be defined. Thus, there will be a high level of failures in establishing PDP contexts.

Still another problem with the current specifications results from unclear definitions. According to the current specifications, if the user equipment requests a valid value for a QoS service attribute in the PDP context activation request message, the serving gateway support node (SGSN) should check that this value is not exceeding the HLR subscribed QoS profile, which is thus taken as a maximum. However, while the term maximum is clear for e.g. the service attribute bit rate, the interpretation for the attributes bit error rate or delay is not quite clear. In the latter case, the subscribed value in the HLR should rather be considered as minimum value so that the user equipment cannot get less than the subscribed delay, and not as maximum value so that the user equipment always gets less than the assigned delay.

Other problems in assigning values of service attributes to requested transmissions arise from the fact that a user of a user equipment is not necessarily confined to requesting a connection in the radio access network in which the equipment is registered. In particular in local wireless hotspots, like in hotels and airports, a locally restricted radio access network may be provided for connections to the public internet or to a corporate network. Such a wireless access network can be realized for example as wireless local area network (WLAN). A user equipment can access the local radio access network, if it is owned equally by the operator of the radio access network with which the user equipment is registered, or if it is owned by another operator having a roaming agreement with the operator of said radio access network with which the user equipment is registered.

Each user equipment is equipped with a smart card, such as a GSM (Global System for Mobile communication) Subscriber Identification Module (SIM), which contains information needed for user authentication and billing in a public radio access network, in particular a cellular network, in which the respective user equipment is registered. The operator of the public radio access network, e.g. a GSM or 3G network, may offer broadband wireless services additionally in a local radio access network, e.g. a WLAN, for the cellular users by utilizing the existing cellular infrastructure for user authentication and billing. The authentication and billing information is carried between the local radio access network and the public radio access network through gateways. Proprietary protocols take care of the signaling between the different network elements.

In conventional WLANs, all users receive a similar service from the network, the so called "best-effort service". This service simply provides means to the user equipment to send traffic to and receive traffic from the network. This approach, however, does not allow to provide different levels of service or qualities of service to different subscribers.

Further care has to be taken with PDP contexts which are used to carry specific traffic. These PDP contexts may require enhanced service attribute setting in the network.

An example is the signaling PDP context which is employed for the control of IP based applications and which may require for the same user equipment different service attributes than the transmission of user data. It has been proposed that the user equipment should transmit only the value of a single service attribute to the network for requesting a signaling PDP context. This single service attribute is supposed to be the additional QoS parameter source statistics descriptor SSD and the assigned value is supposed to be 'signaling'. The network then has to set the values for the other required service attributes according to the requirements for signaling traffic for session control, but it has not yet been proposed how the network is to select these values.

### SUMMARY OF THE INVENTION

It is an object of the invention to enable an improved assignment of values of service attributes to transmissions requested by a user equipment in a radio access network between said user equipment and said radio access network.

This object is reached with the proposed method for assigning values of service attributes defining a Quality of Service of a transmission to transmissions between a user equipment and a radio access network. Upon request of such a transmission by a user equipment of a subscriber registered with some radio access network, values of service attributes are determined that are to be used for the requested transmission. The values are determined based on the one hand on at least one value of at least one service attribute defined by a stored subscriber specific service profile, and based on the other hand on at least one common value of at least one service attribute for all subscribers.

The invention proceeds from the consideration that a variety of interdependent factors determine the most suitable attributes to be used for a transmission between a user equipment and a radio access network. These factors are given in particular by the current request of a user equipment for a specific transmission, by values of service attributes defined by a subscribed service profile and by values of service attributes that are destined to be used in case the user equipment requests a transmission without requesting at the same time specific values or an indication of such values of service attributes. These factors and their interdependencies can be taken into account efficiently, when storing on the one hand a service profile that corresponds to the subscription of a specific subscriber and when providing on the other hand common values of service attributes for all subscribers. Which of the values of the service attributes are selected for a specific transmission is determined according to a request by a user equipment. The composition of the attributes and their values for a requested transmission can vary from using only values from the subscribed set of values via using partly subscribed and party common values to using only common values, depending on the requested transmission.

With the proposed approach, the kind of the requested transmission and the restrictions given by the subscription can be taken into account, while enabling at the same time that conflicts arising from a combination of requested and subscribed attributes can be avoided. In the whole, any kind of request can be taken care of most efficiently, i.e. in particular with a service that is neither worse nor better than what the customer is willing to pay for a specific transmission.

A requested transmission to which values of service attributes are to be assigned can be a transmission in either direction between the requesting user equipment and a radio access network.

Preferably, the values of service attributes defined by a subscriber specific service profile and the common values of service attributes define the Quality of Service of a transmission. In addition or alternatively, the values for any other kind of attributes that are considered useful by the operator for a transmission can be made available.

Advantageously, the user equipment can request together with a transmission specific values of service attributes for the transmission. These values are taken into account additionally in determining the values that are to be used for the transmission.

In a further advantageous embodiment of the invention, the subscriber specific service profiles define the upper and/or lower limit of values allowed for the service attributes for at least one kind of transmission as subscribed for the corresponding user equipment. In case specific values of attributes are requested by a user equipment, this means that the values requested by the user equipment are determined as values to be used, as long as they do not exceed the values defined by the stored subscriber specific service profile. If a requested value exceeds the corresponding subscribed value in a predefined direction, the value to be used for the requested transmission is determined to be the subscribed value.

The subscriber specific values of attributes defined by the profiles can comprise in particular the values of attributes defining the quality of service for requested real-time-traffic transmissions. For real-time transmissions, the values of the attributes defined by the subscriber specific profiles can also be used as default values, in case not all or no values of service attributes are requested by a user equipment for a requested transmission. Alternatively, but preferably in addition, the subscriber specific values of attributes can comprise the values of at least one attribute constituting part of the quality of service for requested non-real-time-traffic transmissions, in particular values for the traffic handling priority. The subscriber specific values of attributes can also be used in other suitable cases as default value.

Instead of one set of limiting values, it is also possible to store several sets of limiting values, the to be provided set being selected for each transmission according to some characteristic of a requested transmission, e.g. according to the access point used by the user equipment. Moreover, storing means storing the subscribed user profiles may comprise a service degradation profile for each user, which indicates values of attributes to be used in case a transmission cannot be effectuated or maintained at the desired service level even though the subscription would allow the requested service level. Such service degradation profiles are described in detail in the co-pending US patent application titled "Apparatus, and associated method for controlling service degradation performance of communications in a radio communication system", and filed October 28, 1999.

The common values of attributes preferably comprise at least one default value for at least one attribute to be used in case the user equipment does not require a specific value for said at least one attribute for a specific requested transmission. In particular, the common values of attributes can comprise a default value for at least one attribute to be used in case the user equipment does not require a specific value for said at least one attribute for a requested non-real-time transmission. In case values of the other attributes required for this kind of transmission are provided by the subscriber specific profile, it is possible that on the one hand these subscriber specific values are used for the transmission while on the other hand provided common values are used for the further required values. The transmission can therefore be based on both, common and subscriber specific values, in case the user equipment does not request any values. This is of particular interest for non-real time transmissions, in which case the conformity of the values of a part of the attributes might have to be checked with the subscriber specific profile.

Similarly as with the subscriber specific profiles, there can be provided one or several sets of common values for at least one attribute. One of the sets can be selected as basis for a transmission for example depending on a group to which the requesting user equipment is assigned, or according to the access point name given by the user equipment. Also the load situation or other information from the radio access network can have an effect on the choice of the to be used set of default attributes. Actually, with such a plurality of sets of common values, it would even be possible to use only the corresponding set of common parameters without adding any information from storing means with subscriber specific values, whenever a non-real-time transmission is requested without requesting values for the required service attributes.

As was already mentioned, a user equipment might request specific values for some but not all of the required service attributes. Even if the missing attribute values are provided as stored subscriber specific values, these might still not be appropriate with the values requested by the user equipment. In a particularly preferred embodiment of the invention, it is therefore proposed that a negotiation takes place which combines the values requested by the user equipment, the stored subscriber specific values, in particular HLR values, and the defined common values.

Predetermined rules are used for carrying out the negotiation, i.e for combining requested values, stored subscriber specific service attributes and defined common service attributes in a coordinated way. The common values may be defined by said rules to be maximum or minimum values or default values. The maximum and minimum values can for example define a respective range within which a value of a specific service attribute requested by a user equipment is allowed to lie. A default value can be used e.g. for a service attribute for which no value was requested and for which no value is stored as subscriber specific value, or for which the subscriber specific value is not to be used because of a possible conflict with a requested attribute value. Instead of a single default value, a set of default values can be defined for a service attribute, wherein each default value of a set is to be used for specific requested values of some other attribute or attributes. Equally, rules can be provided for the meaning of stored subscriber specific service attribute values and for the relation between stored subscriber specific service attribute values and common service attribute values.

It is proposed in particular that if a user equipment explicitly requests a value for a first parameter, for example for the traffic class, but not for a second required parameter, for example for the SDU error rate, a subscribed value for said second parameter is allowed to be used only if the requested first parameter value is equal to the subscribed first parameter value. Otherwise, the second parameter is set to a pre-configured value, which value preferably depends on the requested value of the first parameter.

With such an approach, it is possible to achieve for any situation a feasible QoS profile for a requested transmission.

The defined common attribute values may be stored together with negotiation rules in some network element of a radio access network, for example in an SGSN. This would provide the network element with a pre-configured policy according to which it has to decide how to negotiate parameters. Alternatively the attribute values and/or the rules for the negotiation are under the control of an operator. The interface to control these rules may be a COPS interface to an SGSN carrying this set of rules as a policy. This policy determines the order of negotiation of parameters, e.g. the traffic class may have to be determined first, and how to define new attribute values based on attribute values already negotiated.

An example for such a rule controlled by an operator is:
If negotiated parameter 1 = {value 1 or 2 or 3 or 4 or Subscribed}, then parameter 2 = {fixed value; fixed value if parameter requested {>; <; =} {specific value or subscribed value} or requested value; ...} .

The rule may of course depend on more than one parameter, for example as follows:
If negotiated parameter 1 = {value 1 or 2 or 3 or 4 or Subscribed} AND parameter 2 = {value 1 or 2 or 3}, then parameter 3 = {fixed value; fixed value if parameter requested {>; <; =} {specific value or subscribed value} or requested value; ...} .

The first parameter can be for instance the traffic class of the transmission and the second parameter the allocation/retention priority.

Such rules enable an operator to flexibly decide which subscriber can get which QoS, e.g. which delay, BER, etc., for which subscription.

The stated object is further reached with a network element of a radio access network, comprising processing means for determining values or an indication of such values of service attributes defining the Quality of Service of a transmission to be used for a transmission requested by a user equipment of a subscriber registered with some radio access network. The processing means determine the values or the indication of such values based on at least one provided common value of at least one service attribute for all subscribers that can be assigned to at least one kind of transmission and based on provided values of service attributes defined by a subscriber specific service profile.

According to a first aspect of the invention, the invention is realized within a single radio access network. For this aspect, the subscriber specific service profile can be stored for example in first storing means of a first network element of this network and the common values in storing means of a second network element of this network. In this case, the second network element preferably comprises in addition rules for determining values of service attributes to be used for a transmission requested by a user equipment. As was indicated above, the common values and/or rules for determining values of service attributes to be used for the transmission requested by said user equipment can also be provided for each requested transmission by an operator of the radio access network to the network element carrying out the necessary processing.

For this first aspect of the invention, the mentioned object of the invention is also reached with a radio access network comprising storing means for storing subscriber specific service profiles defining values of at least one service attribute that can be assigned to at least one kind of transmission. The proposed radio access network further comprises processing means for determining values of service attributes to be used for a transmission requested by a user equipment of a subscriber registered with said radio access network based on at least one of the values of service attributes defined by a corresponding subscriber specific service profile stored in the storing means and on at least one provided common value of at least one service attribute that can be assigned to at least one kind of transmission. Corresponding subscriber specific service profile means that it is a service profile stored for the subscriber owning the user equipment requesting the transmission. The requested transmission is then carried out with the determined values of service attributes.

The object is equally reached with a network element for a radio access network comprising processing means corresponding to the processing means of the radio access network proposed for the first aspect of the invention.

The employment of the invention in its first aspect can be seen in particular, though not exclusively, with UMTS and GPRS (General Packet Radio Service).

According to a second aspect of the invention, the invention is realized in two co-operating radio access networks. As for the first aspect, the at least one value of at least one service attribute defined by a subscriber specific service profile is stored in storing means of a first radio access network in which a user equipment is registered. The at least one common value of at least one service attribute, in contrast, is made available in a second radio access network, which is accessed by said user equipment for requesting a transmission.

For this second aspect of the invention, the mentioned object of the invention is reached with a further proposed radio access network in which a user equipment of a subscriber registered with some other radio access network is allowed to request a transmission. The proposed radio access network comprises processing means for determining values of service attributes to be used for a transmission requested by said user equipment based on values of service attributes defined by a subscriber specific service profile received from the other radio access network and on at least one common value of at least one service attribute provided to the processing means, which at least one common value can be assigned to at least one kind of transmission. This radio access network corresponds to the second network mentioned for the second aspect of the invention.

The object is equally reached with a network element for a radio access network in which user equipment registered with some other radio access network is allowed to request a transmission comprising storing means corresponding to the second storing means and processing means corresponding to the processing means of the radio access network proposed for the second aspect of the invention. The processing means of the proposed radio access network, however, could be distributed to several network elements. Therefore, the processing means of the network element of the invention can have only a part of the functions of the processing means of the radio access network. In particular it can be designed to provide only an indication of the values of service attributes to be used for the requested transmission by another network element, instead of determining the specific values. The other network element should then be able to assign and use specific values of the required service attributes according to the indication. This network element is part of the second radio access network mentioned.

The user equipment can access the second radio access network either because it is owned by the same operator as the first radio access network or because the operators of the two networks have a roaming agreement and the subscriber owning the user equipment has moreover a roaming agreement with the operator of the network with which he or she is registered. The first network can be in particular a public cellular network and the second network some locally confined network.

The second aspect of the invention is based on the assumption that operators of the respective first radio access network want to be able to provide different levels of service quality for different user equipment roaming into a respective second radio access network. For example, if one group of subscribers or customers of the first radio access network is paying more for a service than another group of customers in order to obtain a better service quality, this information should be available in the second radio access network in order to provide the correct service quality for the customer also when the user equipment is requesting a transmission in the second radio access network.

When a user equipment roams into the second radio access network, the operator of this second network has to know what kind of subscription the user agreed upon with the first radio access network in order to be able to provide the corresponding service. The subscription may include issues like charging and quality of service. A straightforward solution would be to rely on the information the user equipment supplies to the second network. This would be based purely on the applications running on the user equipment and the service they are requesting from the network. For example, if the user equipment starts a real-time application, like a voice or video application, the user equipment would request a high-priority quality of service class for this IP (internet protocol) flow. The network side quality of service control functions would check whether the request could be accepted. A signaling protocol would carry the information on the requested service between the user equipment and the entities of the second network. The problem with this solution is that the information given by the terminals does not necessarily have to correspond to the subscription, i.e. to the service the user is actually paying for.

With the proposed method, radio access network and network element, in contrast, a reliable information is provided to the second radio access network based on which the correct service can be provided. The operator of the first radio access network with which a subscriber using a user equipment is registered stores for each subscriber at least one subscriber specific service profile according to the subscription of the customer. When the user equipment accesses the second radio access network, entities of this second network control the services and local network resources according to subscriber specific service profile information provided by the first radio access network. This way, the operator of the first radio access network is given control over the services and the way the services are charged for also in the second radio access network. In the most simple approach, the subscriber specific information only includes the number of a group to which the subscriber belongs, to each of different groups being assigned a different quality of service. The common values of service attributes, on the other hand, can be maintained locally in storing means of the second network, since they are independent from the subscription of a specific subscriber.

Obviously, however, the common values could be stored as well in storing means of the first radio access network and be transmitted to the second radio access network together with the subscriber specific values.

In the second aspect of the invention, the first network advantageously provides the stored profile for a subscriber to the second network when a user equipment of the subscriber is authenticated in order to be allowed to enter the second network. All processing can then be carried out exclusively in the second network, even though the subscriber specific profile is stored permanently only at one place, i.e. in storing means of the network with which the user equipment is registered.

The second radio access network should comprise means for mapping to be employed values of service attributes to the service functions employed in said second radio access network for a requested transmission, since the employed attributes do not have to be identical to the attributes used in the first radio access network. The mapping should take into account received subscriber specific values as well as values requested by the user equipment and common values in case no values were requested by the user equipment or in any other appropriate case, for which examples were given above.

The employment of the second aspect of the invention can be seen in particular, though not exclusively, with a WLAN as second radio access network comprising a second storing means. The first radio access network with which the user equipment is registered can be in particular, though not exclusively, a 3G network.

The transmissions dealt with until now can be in particular transmissions of user data. For specific transmissions, e.g. signaling PDP contexts, in addition another approach is proposed. This approach proceed from a user equipment which indicates which kind of traffic it will transmit. The user equipment may request e.g. a signaling PDP context by transmitting an indication that the requested transmission is a signaling PDP context. This indication consists preferably in the setting of the value of the QoS parameter SSD to 'signaling', as mentioned in the section background of the invention. According to the invention, a dedicated service profile defining service attribute values for signaling PDP contexts is stored in the network. In case a transmission request is received from a user equipment indicating that the requested transmission is to be a signaling PDP context, the network can then easily select the required values of the service attributes from the dedicated service profile as attribute values to be used for the transmission.

For UMTS, two different embodiments are presented for this signaling PDP context related approach.

In a first preferred embodiment, a dedicated subscriber specific profile for signaling PDP contexts is introduced as new information set in the HLR. The home operator is thus enabled to specify what values of service attributes each subscriber is allowed to have for a signaling PDP context. The stored dedicated subscriber specific service profiles are carried from the HLR to the SGSN and are employed by the network for selecting the values of service attribute for a transmission whenever a user equipment indicates that a requested transmission is to be a signaling context.

The first preferred embodiment implies also changes to the SGSN. The SGSN normally tries to find a respective subscriber specific service profile for a PDP context in an HLR based on the parameters PDP Type, PDP Address and APN included in a transmission request by a user equipment. The parameter APN is used if there is more than one subscriber specific service profile for the same PDP type and the same PDP address stored in the HLR. Currently, a subscriber specific service profile stored in the HLR is clearly identified with these three parameters. With the first preferred embodiment, however, there could now be at least two subscriber specific service profiles for the same PDP type, PDP address and APN. The SGSN should thus also check which service profile includes the value 'signaling' e.g. in the SSD. It should be prevented that the SGSN selects the wrong service profile, because the service attributes for a transmission of user data may by far not be sufficient for signaling purposes.

In addition, the QoS parameter handling in the SGSN should be changed for the first preferred embodiment. More specifically, the SGSN should take all QoS parameter values except the SDD value from the HLR in case a signaling PDP context was requested. A conventional SGSN does not understand the SDD value 'signaling', but changes the value 'signaling' to 'unknown'.

In the second preferred embodiment of the signaling related approach, values of service attributes of a dedicated service profile for signaling PDP contexts are stored in the SGSN. With this approach, the QoS parameters can be visited operator specific.

In a first alternative of this approach, the SGSN stores the values of all service attributes. In a second alternative, a part of the service attribute values is stored in the SGSN and another part in the radio network controller (RNC). The SGSN should then store the values for the service attributes which are of relevance in the packet core, e.g. traffic class, maximum bitrate, guaranteed bitrate, delivery order, maximum SDU size, allocation/retention priority, and traffic handling priority. The RNC should store on the other hand the values of all service attributes relevant in the radio access network RAN, e.g. SDU format information, delivery of erroneous SDUs, transfer delay residual bit error ratio, and SDU error ratio.

A conventional SGSN may store default values for service attributes. These default values are meant to be used for transmissions of user data. The SGSN should not use these default values when receiving an indication on signaling from the user equipment, because the service attributes for a transmission of user data may by far not be sufficient for signaling purposes. When receiving the indication on signaling, the SGSN selects the default values including 'signaling' e.g. in the SSD.

An example of signaling PDP context is described above. The same mechanisms may also be used for other kind of traffic when a user equipment indicates which kind of traffic it will transmit. An example is emergency signaling which may require e.g. higher priority than conventional signaling.

Preferred embodiments of the invention are included in the subclaims.

### BRIEF DESCRIPTION OF THE FIGURES

The invention will be described in the following in more detail with reference to drawings of which:
- FIG. 1: illustrates an implementation of a method according to the first aspect of the invention;
- FIG. 2: is a flow chart for the method in the implementation of figure 1;
- FIG. 3: shows a high-level network architecture for WLAN-cellular interworking; and
- FIG. 4: shows an implementation of a WLAN QoS architecture to be used for the second aspect of the invention.

### DETAILED DESCRIPTION OF THE INVENTION

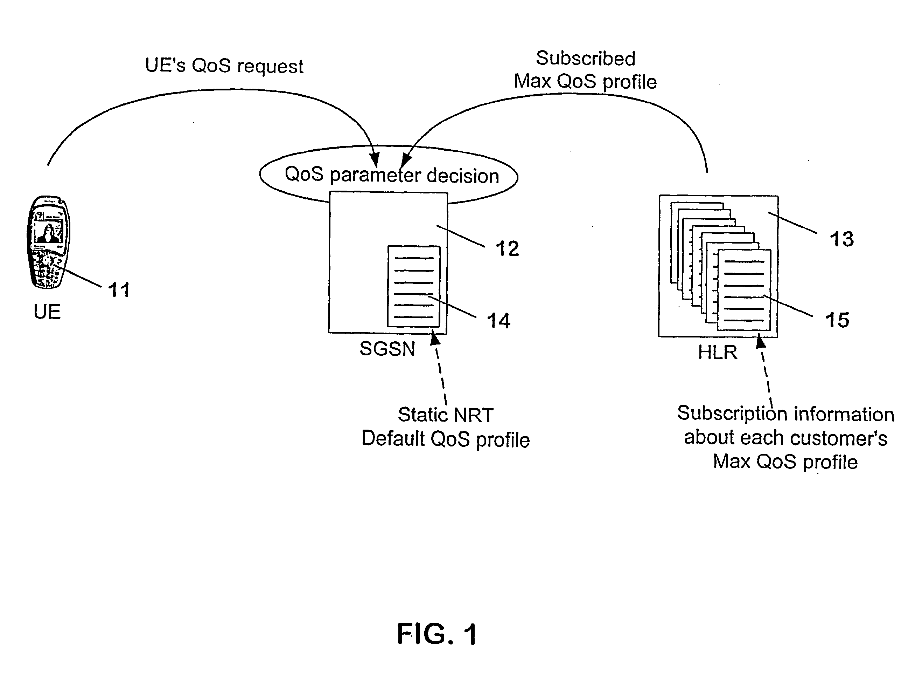

Figure 1 illustrates the co-operation between a user equipment UE 11, a serving gateway support node SGSN 12 and a home location register HLR 13 of a UMTS network for assigning values of service attributes to a requested transmission according to an implementation of the first aspect of the invention.

An SGSN is employed in cellular networks for keeping track of the location of each user equipment and for performing security functions and access control. In the SGSN 12 of figure 1, a static NRT (non-real-time) and default QoS profile 14 is stored for an additional QoS control function. The profile 14 comprises a single set of common values for some NRT service attributes for all customers. More specifically, values are provided for the delivery order, the maximum SDU size, the SDU error ratio, the residual BER, the delivery of erroneous SDUs, and for the allocation/retention priority. These values are to be used if specific required values of QoS attributes are not indicated by a user equipment for a requested non-real-time transmission, like an interactive or background traffic class transmission. The common values of service attributes are set to some good average of a non-real-time QoS level chosen from the attribute values available for the interactive traffic class.

In the HLR 13, a subscriber specific service profile Max QoS 15 is stored for each customer/subscriber. The service profile 15 includes the best possible value for each QoS attribute according to the subscription of the respective customer. It contains mainly the subscribed values for the different attributes required for a real-time traffic class, either for the conversational or the streaming traffic class, i.e. values for the maximum bitrate, the delivery order, the maximum SDU size, an SDU format information, the SDU error ratio, the residual BER, the delivery of erroneous SDUs, the allocation/retention priority, the transfer delay and for the guaranteed bitrate. In addition, a subscribed value for the traffic handling priority for non-real-time traffic classes is included in each subscriber specific service profile 15 in the HLR 13.

A user equipment 11 desiring a transmission sends a connection request to the SGSN 12. In addition, the user equipment 11 can also transmit desired values of service attributes to the SGSN 12 that are to be used for the requested transmission. Following the request of a transmission by a user equipment 11, the subscriber specific profile 15 for the customer owning this user equipment is transferred from the HLR 13 to the SGSN 12. In case there is still a recently transferred profile 15 for the customer owning the requesting user equipment 11 available in the SGSN 12, a new transmission is not necessary.

Consequently, there are now up to three sets of service profiles accumulated in the SGSN 12. Based on these service profiles, it is then determined in the SGSN 12 which values are to be employed for the different attributes required for the requested connection.

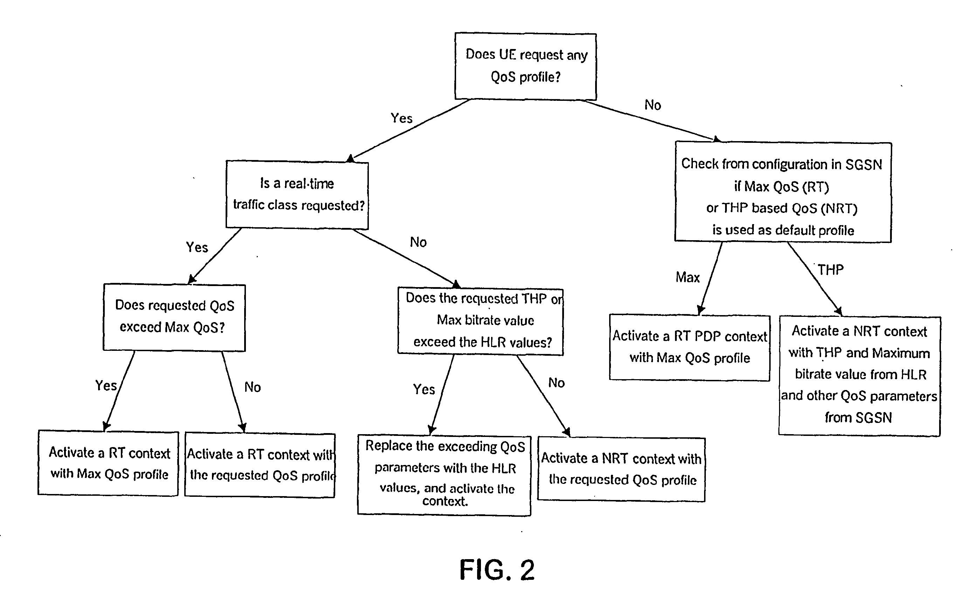

The selection of the values of attributes that are to be used for the requested transmission will now be explained in more detail with reference to the flow chart of figure 2.

The user equipment 11 can request a transmission in any of the four available transmission classes, the conversational, the streaming, the interactive or the background traffic class. Moreover, as mentioned above, the user equipment 11 can but does not have to request a desired QoS profile for the requested transmission.

After a transmission request has been received by the SGSN 12, it is first determined in the SGSN 12, whether the request by the user equipment 11 contains a request for a specific QoS profile.

In case no specific QoS profile is requested by the user equipment 11, it is checked from the configuration in the SGSN 12 which values of attributes are to be used as default profile for the requested connection. The configuration can be set by the operator of the network and determines whether only the values of attributes stored in the HLR 13 are to be used or if a combination of some of the values of attributes in the HLR 13 and the values of attributes in the SGSN 12 are to be used for a specific requested connection.

In the implementation corresponding to the flow chart of figure 2, in case the real-time profile is used as default profile, all values in the service profile received from the HLR 13 except for the THP value are selected to be used for the connection. A real-time PDP connection is then activated with these attributes.

In case the non-real-time profile is used as default profile, the values for the THP and for the maximum bitrate in the profile 15 received from the HLR 13 are selected to be used as values of the corresponding attributes for the requested connection. Additionally, the values of the attributes in the profile 14 stored in the SGSN 12 are selected to be used for the remaining required attributes for the connection. A non-real-time connection is then activated with these combined values of attributes.

In case a specific QoS profile is requested by the user equipment 11, the traffic has to be restricted to the subscribed attribute levels. To this end, it is determined in another step in the SGSN 12, whether a real-time or a non-real-time traffic class is requested by the user equipment 11.

In case a real-time traffic class is requested by the user equipment, it is moreover determined in the SGSN 12, whether the requested QoS values exceed the values predetermined in the profile 15 received from the HLR 13. If they do not exceed the predetermined values, a real-time connection is activated with the requested QoS profile. If any of the requested values of attributes exceeds the corresponding subscribed value, however, the real-time connection is activated with the corresponding maximal subscribed value received from the HLR 13.

In case a non-real-time traffic is requested by the user equipment, it is determined in the SGSN 12, whether the requested value for the THP or for the requested maximal bitrate value exceeds the corresponding subscribed value in the profile 15 received from the HLR 13. If they do not exceed the subscribed values, the non-real-time connection is activated with the requested QoS profile. If, however, one of the requested values exceed the subscribed THP or maximum bitrate value, the exceeding values are replaced with the corresponding subscribed attributes received from the HLR 13, and the non-real-time connection is activated with these replaced values. Further attributes for which the values are to be limited could be treated in the same way.

Summarized, the QoS profile stored in the first storing means in the HLR 13 can be adjusted for real-time traffic, while a value of an additional attribute important for non-real-time traffic can be stored together with this profile. When a real-time profile is requested, the values of the required attributes are assembled based only on the values in the profile in the HLR 13 and possibly on requested values. When a non-real-time transmission is requested by the user equipment 11, the QoS profile for this connection is assembled by using some QoS attribute values from the first storing means in the HLR 13 and some from the second storing means in the SGSN 12, considering in addition a possible request of values by the user equipment 11. Thus, the QoS of real-time and non-real time traffic can be controlled separately.

Instead of storing additional values of QoS attributes for non-real-time traffic in the HLR, these values can be obtained in several different ways based on the attributes stored in the HLR for the real-time traffic. Two possibilities will be briefly described as further embodiments of the first aspect of the invention.

In the first alternative, the allocation/retention priority in the received HLR profile is used. Allocation/retention priority is defined in the above mentioned standard 3GPP TS 23.107 as specifying "the relative importance compared to other UMTS bearers for allocation and retention of the UMTS bearer. The Allocation/Retention Priority attribute is a subscription attribute which is not negotiated from the mobile terminal." The SGSN can read the allocation/retention priority attribute from the received HLR QoS profile and then derive the non-real-time value for the THP from it. Both of them have three values 1, 2 and 3.

In the second alternative, the guaranteed bitrate value in the received HLR profile is evaluated in the SGSN, where a mapping of certain bitrate values into certain THP values is defined. For example, a value of 128 kbps for the guaranteed bitrate in the HLR profile can result in the best THP, a value of 64 kbps in the second best THP, a value of 32 kbps in the lowest THP, and a value of 0 kbps can result in a treatment as background class.

It would also be possible to store a complete QoS profile for both, real-time traffic and for non-real-time traffic in storing means. The real-time profile would then limit requested profiles for real-time traffic and the non-real-time profile would limit requested profiles for non-real-time traffic. The NRT profile could be used in addition as default QoS profile for the user equipment in case no profile is requested by the user equipment. This would mean that the first and the second storing means are realized by single storing means.

In a similar way, a dedicated QoS profile can even be stored for each of the four traffic classes for each user equipment in storing means of the radio access network. The user equipment could then for instance define only the traffic class attribute and the rest of the attribute values would be fetched from the corresponding QoS profile in the storing means. The four QoS profiles in such storing means can be adjusted for typical applications using the traffic class in question. For example, the conversational traffic class QoS profile is adjusted to the needs of a typical VoIP (Voice over Internet Protocol) application, the streaming traffic class QoS profile is adjusted for video streaming, the interactive traffic class QoS profile is adjusted for web browsing, and the background traffic class QoS profile is adjusted for best effort file transfer. If the terminal does not request any values of QoS attributes at all, the values for the interactive or the background profile should be used. Therefore, the first and the second storing means are realized again by single storing means in this implementation.

In case two or even four complete QoS profiles are to be stored for each user equipment in a combined first and second storing means, these storing means are best integrated in the HLR in which the authentication and billing information for the respective user equipment is stored. Upon a transmission request by a user equipment, information can then be added to a signaling from the SGSN to the HLR/HSS about the traffic class that is requested. Based on this information, the HLR can send the correct traffic class QoS profile to the SGSN. Thus, in the SGSN, the received profile simply has to be applied. Another solution would be to transfer all the profiles to the SGSN in the PDP context activation, the correct one being selected in the SGSN according to the request by the user equipment.

As mentioned in the background of the invention, the overall QoS is defined by a QoS profile made up by 12 service attributes. These attributes have a considerable influence on each other. A second embodiment of the first aspect of the invention is presented, which deals in more detail with the setting of each of the required attributes in a way that conflicts between selected attributes and thus rejected transmissions requests are avoided.

For the second embodiment, reference will be made again to figure 1, since the basic structure of a mobile radio system in which it is designed is the same as in the first embodiment. A mobile radio system comprises an SGSN 12 and an HLR 13 of a UMTS network and a user equipment UE 11. The HLR 13 stores a subscriber specific QoS profile with at least two different QoS service attributes. The SGSN 12 stores in addition common values of service attributes. For a desired PDP context, the user equipment 11 can request from the SGSN 12 a specific QoS profile in which each service attribute can be set to a numerical value or to a default value "subscribed". The SGSN 12 can download the subscribed QoS profile from the HLR 13, negotiate a QoS profile with the user equipment 11 and interpret each attribute value received from the HLR 13 or stored in the SGSH 12 as default value, maximum value or minimum value. To this end, several rules are implemented in the SGSN 12 which allow a determination of all attribute values that may be required for a requested PDP context. The rules also include the order in which the attribute values are determined. Alternatively, these rules are not hard coded in the SGSN 12 but under the control of an operator of the mobile radio system, which operator provides the rules to the SGSN 12 via a COPS interface.

A first service attribute that is to be determined according to the rules implemented in the SGSN 12 is the traffic class. The respective value of the first attribute indicates the type of application for which the employed radio access bearer (RAB) service is optimized. Possible values are 'conversational', 'streaming', 'interactive' or 'background'. The traffic class should be determined first, since it indicates the type of traffic and is thus required to allow a correct setting of the other attributes. In case the user equipment 11 requesting a PDP context requests a specific value for this attribute, the negotiated value will be the value sent by user equipment 11, if this value is smaller or equal to a subscribed value. In case the value sent by the user equipment 11 is "subscribed", the subscribed traffic class set in the HLR 13 is used as negotiated value. However, in case the user equipment 11 requests a higher value than the subscribed value, the subscribed value is used as negotiated value.

A second service attribute to be set is the maximum bitrate allowed for uplink and downlink transmissions respectively in kbps. It indicates the maximum number of bits delivered by UTRAN and to UTRAN at a service access point (SAP) within a period of time, divided by the duration of the period. In both cases, the negotiated value is the value requested by the user equipment 11, if any, in case this value is below or equal to the respective subscribed value. In case the value sent by the user equipment 11 is "subscribed", the respective subscribed maximum bitrate set in the HLR 13 is used as negotiated value. In case the user equipment 11 requests a value which is higher than the respective subscribed maximum bitrate, the subscribed value is used as negotiated value.

A third required service attribute is the guaranteed bitrate for uplink and downlink transmissions in kbps. It indicates the guaranteed number of bits delivered at an SAP within a period of time, divided by the duration of the period. The determination of the attribute value to be used corresponds to the determination of the value for the first two service attributes. That is, for the guaranteed bitrate in both directions, the negotiated value is the value requested by the user equipment 11, if any, in case this value is below or equal to the respective subscribed value. In case the value sent by the user equipment 11 is "subscribed", the respective subscribed guaranteed bitrate set in the HLR 13 is used as negotiated value. In case the user equipment 11 requests a value which is higher than the respective subscribed guaranteed bitrate, the subscribed value is used as negotiated value. No guaranteed bitrate has to be determined, however, if the negotiated traffic class is 'interactive' or 'background'.

A fourth service attribute to be set is the delivery order, which indicates whether the RAB shall provide in-sequence SDU delivery or not. It can have the value 'Yes' or 'No'. In the first 3G release, this parameter is always set to 'No'. In the future, however, if and when a use is found for this attribute, it should follow the principle indicated for the first three service attributes, i.e. the negotiated value is either the value requested by a user equipment 11 or the subscribed delivery order set in the HLR 13.

A fifth service attribute to be set is the maximum SDU size in octets, which indicates the maximum allowed SDU size. In case the user equipment 11 sends a value different from the subscribed value for this attribute, this requested value is used as negotiated parameter. In case the user equipment 11 requests the "subscribed" value, and in case in addition the negotiated traffic class corresponds to the subscribed traffic class, the subscribed maximum SDU size is used. Otherwise, the maximum SDU size is set to the subscribed value or to 1500 octets, whichever value is larger. The reason for this latter rule is that the conversational traffic class may be subscribed together with a small maximum SDU size which is optimized for speech. However, enforcing this small value for other classes than the subscribed conversational traffic class, such as 'streaming', e.g. for video frames, 'interactive', e.g. for Web browsing, or 'background', e.g. for file download, would make no sense. If the PDP type PPP is used, the proper SDU size of 1502 octets, which is larger than 1500, will automatically be taken from the HLR 13.

It is to be noted that the subscribed value for this service attribute does not have to be used as a maximum value, i.e. the negotiated value does not have to be smaller than the subscribed value.

A sixth service attribute to be set is the SDU format information in bits. It contains the list of possible exact sizes of SDUs and/or RAB Subflow Combination bit rates. In the cited specifications, a value for this parameter can neither be requested by a user equipment 11 nor be configured in the HLR 13. If this service attribute is later added as a normal QoS service attribute, it is proposed that a value requested by the user equipment 11 is used as negotiated value. Only if the user equipment 11 requests the "subscribed" value, the subscribed SDU format information is used as negotiated value, in case the negotiated traffic class corresponds to the subscribed traffic class. No SDU format information will be determined in case the negotiated traffic class is 'interactive' or 'background'.

A seventh service attribute to be set is the delivery of erroneous SDUs, which indicates whether SDUs with detected errors shall be delivered or not. It can take the values 'Yes', 'No' and 'No-error-detection-consideration'. A value different from the "subscribed" value requested by the user equipment 11 is used for this parameter. In case the user equipment 11 requests the "subscribed" value, and if the negotiated traffic class corresponds to the subscribed traffic class, the value subscribed for the delivery of erroneous SDUs is used. Otherwise the parameter is set to 'No'. It is to be noted that the subscribed value is not treated as a maximum value.

An eighth service attribute to be set is the SDU error ratio. It indicates the fraction of SDUs lost or detected as erroneous. If the user equipment 11 requests a particular numeric value for this attribute, the SGSN 12 compares the requested value to a static range of values that is allowed for the negotiated traffic class. The respective range is defined by a minimum and a maximum value stored in the SGSN 12 as common service attribute values. If the requested attribute value does not lie within this range, the requested attribute value is replaced by the maximum or minimum value of the range. For the conversational and the streaming traffic class, the range could be e.g. from 10⁻⁴ to 10⁻¹. For the background and the interactive traffic class, the range could be e.g. from 10⁻⁶ to 10⁻³. If the user equipment 11 requests the "subscribed" value for both, SDU error ratio and traffic class, the subscribed value is fetched from the HLR 13. But it is also checked that this value complies with the permitted value range stored in the SGSN 12. If the user equipment 11 requests the "subscribed" value for the SDU error ratio and another than the "subscribed" value for the traffic class, then a traffic class specific "default" value is used for the SDU error ratio. This default value is also stored in the SGSN 12 as common service attribute value.

It is to be noted that the service attribute SDU error ratio is not required whenever the service attribute delivery of erroneous SDU is set to "no-error-detection-consideration".

A ninth service attribute to be set is the residual bit error ratio, which indicates the undetected bit error ratio for each subflow in the delivered SDU. The residual bit error ratio is determined similarly as the SDU error ratio. Thus, if the user equipment 11 requests a particular numeric value for the residual bit error ratio, the SGSN 12 compares the requested value to a static range of values that is allowed for the negotiated traffic class. The respective range is defined as well by a minimum and a maximum value stored in the SGSN 12 as common service attribute values. If the requested attribute value does not lie within this range, the requested parameter value is replaced by the maximum or minimum value of the range. For the conversational and the streaming traffic class, the range could be e.g. from 10⁻⁵ to 10⁻² . For the background and the interactive class, the range could be e.g. from 10⁻⁸ to 10⁻³. If the user equipment 11 requests "subscribed" values for both, the residual bit error ratio and the traffic class, the subscribed value for the subscribed value is fetched from the HLR 13. But it is also checked that this subscribed value complies with the permitted value range stored in the SGSN 12. If the user equipment 11 requests the "subscribed" value for the residual bit error ratio and another than the "subscribed" value for the traffic class, then a traffic class specific "default" value is used for the residual bit error ratio. This default values is stored in the SGSN 12 as common service attribute value.

A tenth service attribute to be set is the transfer delay in ms. It indicates the maximum delay for 95th percentile of the distribution of delay for all delivered SDUs during the lifetime of a RAB, where delay for an SDU is defined as the time from a request to transfer an SDU at one SAP to its delivery at the other SAP. If the negotiated traffic class is 'interactive' or 'background', this attribute is ignored. A value requested by the user equipment 11 is used as negotiated value, in case this value is smaller than or equal to the subscribed value. If the user equipment 11 requests the "subscribed" value or a value larger than the subscribed value, the subscribed transfer delay value is used as negotiated value, in case the negotiated traffic class corresponds in addition to the subscribed traffic class or is the conversational class. Otherwise, in case the negotiated class is the streaming class, the transfer delay is set to 250 ms or to the subscribed value, if the subscribed value is larger than 250ms, which is to be checked against the RNC.

In a more sophisticated approach, also the SDU error ratio could be taken into account when determining a value for the transfer delay.

An eleventh service attribute to be set is the traffic handling priority. It specifies the relative importance for handling of all SDUs belonging to the RAB compared to the SDUs of other bearers. This attribute is valid only for the interactive traffic class. If a value larger than the subscribed value is requested for this parameter by the user equipment 11, the requested value is used as negotiated value. Otherwise, the subscribed value is used, if it is present for this user equipment 11 in the HLR 13. If it is not present in the HLR 13, the value of the attribute traffic handling priority is set to a value used for the service attribute allocation/retention priority.

The allocation/retention priority as twelfth service attribute is not negotiated with the user equipment 11. Rather, the subscribed value stored in the HLR 13 is transmitted to the RNC and a GGSN (gateway general packet radio system support node). This parameter specifies the relative importance compared to other RABs for allocation and retention of the RAB.

The above mentioned specification 25.413 defines additional parameters subordinated to the allocation/retention priority. One such additional parameter is the pre-emption capability, which indicates the pre-emption capability of the request on other RABs. Another additional parameter is the pre-emption vulnerability, which indicates the vulnerability of the RAB to preemption of other RABs. A simple rule to take care of these parameters is never to use pre-emption.

The allocation/retention priority is linked to the respective subscription of a user equipment, and its values are sometimes referred to as 1 = gold, 2 = silver and 3 = bronze. Based on these values, it is proposed as a more advanced rule to set the pre-emption capability to a value 'may trigger pre-emption' if the allocation/retention priority equals 1, and otherwise to a value 'shall not trigger pre-emption'. In addition, it is proposed to set the pre-emption vulnerability to a value 'pre-emptable' if the allocation/retention priority equals 3 and otherwise to a value 'not pre-emptable'.

It is important to note that some parameters defined in the RANAP (radio access network application part) in the technical specification 3GPP 25.413 V3.4.0 (2000-12): "3rd Generation Partnership Project; Technical Specification Group Radio Access Network; UTRAN Iu Interface RANAP Signaling (Release 1999)" cannot be negotiated by the user equipment 11 or be set in the HLR 13. Therefore, it is proposed in an extended embodiment for RANAP signaling according to specification 25.413 to always set the parameter source statistics descriptor, which specifies characteristics of the source of submitted SDUs, to 'unknown' for the traffic classes 'conversational' and 'streaming'. Moreover, it is proposed to always set the parameter relocation requirement, which specifies in which way the radio access bearer shall be treated in case of relocation, to 'none'. The parameter queuing allowed, which indicates whether the request can be placed into a resource allocation queue or not, is always set to 'queuing allowed'. These three parameters are also defined as parameters subordinated to the allocation/retention attribute. In addition, the SDU format information parameter shall not be included in this extended embodiment.

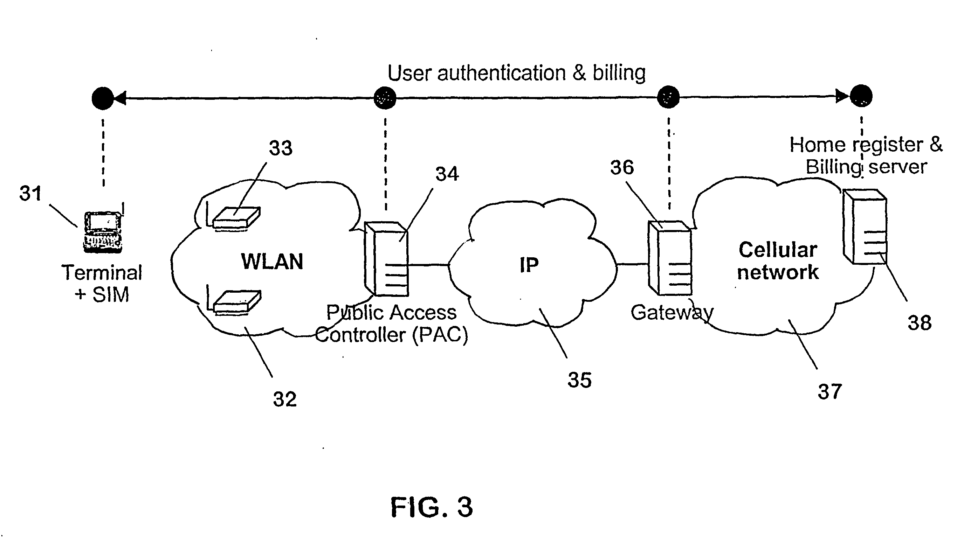

Figure 3 shows a high-level network architecture for an interworking of a WLAN and a cellular network, for which architecture an implementation of the second aspect of the invention is to be employed.

In figure 3, a WLAN 32 with two access points 33 is depicted. The WLAN 32 is connected via a public access controller (PAC) 34 to a public IP network 35 and further via a gateway 36 to a public cellular network 37, more specifically to a GSM network. The cellular network 37 comprises several home register and billing servers 38, of which one is shown. The WLAN 32 is located at a local wireless hotspot and is provided by a private owner. The operator of the cellular network 37 has a roaming agreement with the operator of the WLAN 32.

A mobile terminal 31 with a SIM (GSM Subscriber Identification Module) is located in the access area of the WLAN 32. The terminal 31 is registered with the cellular network 37. The authentication and billing information for the terminal 31 is stored in the depicted home register and billing server 38. Corresponding information is stored in the SIM of the terminal 31. The terminal 31 has a WLAN roaming agreement with the operator of the cellular network 37.

The authentication and billing information for the terminal 31 accessing the WLAN 32 is transmitted between the WLAN 32 and the cellular network 37 through the gateway 36. Proprietary protocols take care of the signaling between the different network elements. Possible details of an authentication mechanism are e.g. presented in the co-pending US patent application "Authentication in a packet data network" by Jyri Rinnemaa et al, filed March 31, 2000.

The second aspect of the invention presents a possibility of providing to a terminal 31 registered with the cellular network 37 also in the WLAN 32 with the Quality of Service agreed upon with the operator of the cellular network 37.

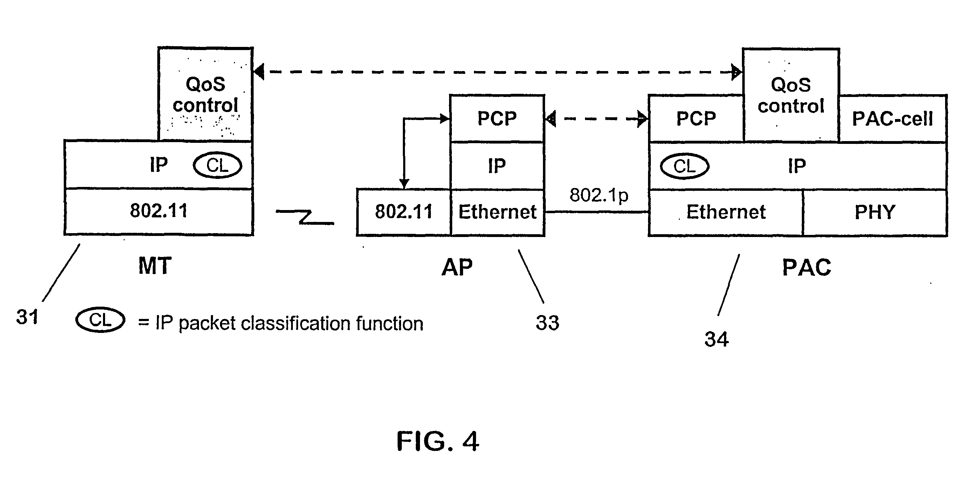

Figure 4 illustrates how the service profile information in the home register and billing servers 38 of the architecture of figure 3 can be combined with a specific WLAN QoS architecture according to the second aspect of the invention.

The QoS architecture on the WLAN side includes the PAC 34 of the WLAN 32, an access point (AP) 33 of the WLAN 32 and a mobile terminal 31. The PAC 34 is the interface of the WLAN 32 towards the cellular network 37, and the access point 33 provides an access to the WLAN 32 for the mobile terminal 31.

The PAC 34 has on the one hand a physical layer connection PHY to the cellular network 37 and on the other hand an Ethernet connection to the AP 33. Additionally, it comprises an IP processing entity with an IP packet classification function. Further, a PCF (Point Coordination Function) Control Protocol (PCP) entity, a QoS control entity and a PAC-cell entity are provided. In the QoS control entity, a default QoS profile is stored.

The AP 33 comprises on the one hand the mentioned Ethernet connection to the PAC 34 and on the other hand an IEEE 802.11 PCF connection option to mobile terminals. Like the PAC 34, it has moreover an IP processing entity and a PCP entity for a corresponding communication with the PAC 34.

The mobile terminal 31, finally, comprises an 802.11 PCF connection option to an AP 33, an IP processing entity with an IP packet classification function and a QoS control entity for communication with the corresponding entity of the PAC 34.

The control of the QoS of downlink transmissions provided with the presented architecture will now be described.

The mobile terminal 31 is registered with the cellular network 37. Additionally to authentication information, a service profile is stored in a specific home register and billing servers 38 of the cellular network 37. The service profile is based on the subscription information the user of the mobile terminal 31 has agreed upon with the operator of the cellular network 37 for requested transmissions. The actual attributes for which values are comprised in the service profile are determined by the operator. It may contain for example the maximum QoS values that are allowed to be requested by a specific terminal 31.

The mobile terminal 31 roams into the WLAN 32, which is able to provide broadband transmissions for terminals 31 that have a roaming agreement with the cellular operator. First, an authentication of the terminal 31 takes place based on the authentication information stored in the SIM of the terminal 31 and in the home register and billing server 38 of the cellular network 37. At the same time, the subscribed service profile is transmitted from the home register and billing server 38 of the cellular network 37 to the PAC 34 of the WLAN 32. The PAC-cell entity of the PAC 34 is used as control protocol between the PAC 34 and a gateway in the cellular network 37. It is used for transmitting signaling messages from the WLAN 32 to the cellular network 37 and vice versa. For example, user authentication messages are carried by this protocol. Based on the received service profile, the PAC 34 constructs and maintains an IP packet filtering table containing filtering information for all IP flows or users requiring non-default QoS. That means that the IP packet filters are set up dynamically. The IP packet filters may be based in addition on requests sent by the terminal 31 requesting to prioritize certain IP flows. Especially, if the flows are created dynamically with dynamic UDP/TCP ports, it is not possible to fix the IP packet filtering table in advance. The terminal sends the requests using the QoS control protocol.

When a downlink transmission with a specific QoS is requested by the terminal 31, the requested service profile information has to be mapped into the WLAN QoS classes defined for transmissions in the WLAN 32. The provision of a specific QoS is controlled by the QoS control entities in the mobile terminal 31 and the PAC 34. The header of each downlink IP packet received by the PAC 34 contains information indicating a requested QoS for the transmission of the IP packets. Each downlink IP packet is therefore processed in the IP entity of the PAC 34 in order to determine the correct WLAN QoS class to be used for the IP packets. More specifically, the header of each IP packet is processed, and based on the header information and the IP packet filtering information the packet is scheduled for a certain WLAN QoS class.

After the PAC 34 has classified the IP packets, the QoS class, e.g. real-time or non-real-time, is decided. The PAC 34 marks the downlink IP packets according to the classification using 802.1p bits. The p-bits are a part of the Ethernet frame header and can therefore be used for marking different QoS classes at the Ethernet level.

When a downlink transmission without a specific QoS is requested by the terminal 31, the p-bits can be marked according to the stored default profile when the received IP packets have been classified.

The marked IP packets are received via Ethernet by the access point 33, which is designed to be able to read the 802.1p bits and to understand the different QoS classes and the corresponding p-bit patterns. The AP 33 is thereby able to schedule the downlink packets according to the 802.1p bits, while no user-plane IP packet processing is required in the AP 33. The IP packets are simply mapped from the Ethernet frames to the queue of the correct WLAN QoS class.

In addition, a PCP is employed between the PAC 34 and the AP 33 for controlling the transmission between the AP 33 and the mobile terminal 31 by the 802.11 connections. The QoS control protocol in the PAC 34 uses PCP to control the PCF function in the AP 33, i.e. to update the PCF polling list.

The WLAN QoS control functions in the QoS control entity of the PAC 34 take care of the IP packet QoS, as well as the radio link packet scheduling. Moreover, the QoS control functions can have an interface to application level control protocols, like SIP and H.323, in order to be able to receive information of certain IP flows and their QoS requirements. SIP is an SMDS (switched multimegabit data services) interface protocol and H.323 is an ITU-T set of standards for packet-based multimedia networks allowing VoIP services to connect to traditional circuit-switched voice networks. The subscriber specific service profile information received by the cellular network 37 can be used for prioritizing certain user equipments, or certain applications, or be used as an input for the admission control function.

While downlink packet classification is carried out in the PAC 34 of the WLAN 32, uplink packet classification takes place in the IP entity of the mobile terminal 31.

Thus, the cellular operator can define service profiles for users having a WLAN roaming agreement with the operator. The WLAN entities control the access to local and external network resources according to the subscriber specific service profile information defined in the cellular network. This way, the cellular operator can have control over the services and the way the services are charged for when users are roaming into WLAN hotspots.

As one alternative to the QoS control described with reference to figure 4, a simple traffic control mechanism can be implemented in the PAC 34. To this end, a certain amount of traffic that a user is allowed to receive is stored as a value of one of the attributes in the service profile which the PAC 34 receives from the cellular network 37 during user authentication. The PAC 34 can then control the downlink traffic of the users according to the allowed amount of traffic. The users can for example be categorized into three groups, each group having a certain traffic limit with a certain price. If a user exceeds the traffic limit, the PAC 34 starts dropping the excess traffic. This is a simple mechanism that can be used for prioritizing different users.

## Claims

1. A method for assigning values of service attributes defining the Quality of Service of a transmission to transmissions between a user equipment (11,31) and a radio access network (32), comprising upon request of such a transmission by a user equipment (11,31) of a subscriber registered with some radio access network (37) determining values of service attributes to be used for the transmission requested by said user equipment (11, 31),
**characterized in that**
said values of service attributes which are to be used for the transmission are determined based on at least one value of at least one service attribute defined by a stored subscriber specific service profile (15), and based on at least one common value of at least one service attribute for all subscribers.

2. The method of claim 1 wherein the values of service attributes to be used for the requested transmission are determined further based on values of service attributes requested by the user equipment (11,31).

3. The method of claim 1 or 2 wherein the values of service attributes defined by a subscriber specific service profile (15) and the common values of service attributes define the Quality of Service of a transmission.

4. The method of one of the preceding claims wherein the values of service attributes defined by a subscriber specific service profile (15) define a minimum and/or maximum values allowed for the service attributes for at least one kind of transmission as subscribed by the corresponding user equipment (11,31).

5. The method of one of the preceding claims wherein the values of service attributes in a subscriber specific service profile (15) comprise at least one default value for at least one service attribute to be used in case a user equipment (11,31) requests a transmission without requesting a specific value for said at least one service attribute required for the requested transmission.

6. The method of one of the preceding claims wherein the values of service attributes defined by a subscriber specific service profile (15) comprise the values of service attributes defining the Quality of Service for requested real-time-traffic transmissions.

7. The method of one of the preceding claims wherein the values of service attributes defined by a subscriber specific service profile (15) comprise the values of at least one service attribute defining at least part of the Quality of Service for requested non-real-time-traffic transmissions.

8. The method of one of the preceding claims wherein in case said user equipment (11,31) requests a part of the values of service attributes required for a requested transmission, the values of service attributes defined by a subscriber specific service profile (15) are only used for the remaining required attribute values if they are appropriate for the requested transmission when using requested values of service attributes.

9. The method of one of the preceding claims wherein the common values of service attributes comprise at least one default value for at least one service attribute to be used in case a user equipment (11,31) requests a transmission without requesting a specific value for said at least one service attribute required for the requested transmission.

10. The method of claim 9 wherein at least one default value of at least one service attribute of said common values of service attributes is only used as service attribute value for a requested transmission in case a value defined by the subscriber specific profile (15) for said service attribute is not appropriate for the requested transmission when using values of service attributes requested by a user equipment (11,31), or in case no value is stored in the subscriber specific profile (15) for said service attribute.

11. The method of one of the preceding claims wherein the common values of service attributes define a range of values for at least one service attribute, said method comprising adjusting a value for said at least one service attribute requested by a user equipment (11,31) and lying outside of the respective defined range to lie within said range.

12. The method of one of the preceding claims wherein the common values of service attributes comprise a set of values for at least one service attribute, each value of said set being assigned to a specific value of at least one other service attribute, said method comprising selecting a value for a service attribute for which such a set is provided and for which no value is requested by a user equipment (11,31) from said set of values according to the value of at least one other service attribute requested by said user equipment (11,31), if any, in case a value stored in the subscriber specific profile (15) for said service attribute is not appropriate for the requested transmission when using the value of said at least one other service attribute requested by said user equipment (11,31), or in case no value is stored in the subscriber specific profile (15) for said service attribute.

13. The method of one of the preceding claims wherein said at least one value of at least one service attribute defined by a subscriber specific service profile (15) is stored in storing means of a first network element (13) of a radio access network, and wherein said at least one common value of at least one service attribute is stored in storing means of a second network element (12) of the same radio access network.

14. The method of claim 13 wherein in said second network element (12) rules are stored in addition for determining values of service attributes to be used for a transmission requested by said user equipment (11).

15. The method of one of claims 1 to 12 wherein said at least one value of at least one service attribute defined by a subscriber specific service profile (15) is stored in storing means of a network element (13) of a radio access network and wherein said at least one common value of at least one service attribute and/or rules for determining values of service attributes to be used for the transmission requested by said user equipment (11) are provided for each requested transmission by an operator of said radio access network.

16. The method of one of claims 13 to 15 wherein said radio access network is a UMTS radio communications network.

17. The method of one of claims 1 to 12 wherein said at least one value of at least one service attribute defined by a subscriber specific service profile is stored in storing means of a first radio access network (37), wherein said at least one common value of at least one service attribute is available in a second radio access network (32), said first radio access network (37) being a network for which a user equipment (31) requesting a transmission is registered and said second radio access network (32) being accessed by said user equipment (31) for requesting the transmission.

18. The method of claim 17 wherein said at least one common value of at least one service attribute is stored in storing means of said second radio access network (32).

19. The method of claim 17 wherein said at least one common value of at least one service attribute is provided for each requested transmission by the operator of said second radio access network (37).

20. The method of one of claims 17 to 19 further comprising transmitting the values of service attributes defined by a subscriber specific service profile stored in the first storing means from said first radio access network (37) to said second radio access network (32) during an authentication of said user equipment (31) accessing said second radio access network (32).

21. The method of one of claims 17 to 20 wherein values of service attributes to be used for a requested transmission in the second radio access network (32) are determined by mapping values of service attributes determined based on values of service attributes as far as requested by a user equipment (31) for a requested transmission, on subscriber specific values of service attributes and on common values of service attributes, which service attributes are defined in the first radio access network (37), to values of service attributes defined in the second radio access network (32).

22. The method of one of claims 17 to 21 wherein said second radio access network (32) is a wireless local area network (WLAN).

23. The method of one of the preceding claims comprising, in case said user equipment (11, 31) requests a transmission with an indication that said requested transmission is used for specific traffic, selecting as values of service attributes to be used for said transmission values of service attributes defined by a stored dedicated service profile.

24. The method of claim 23 wherein said requested transmission is a signaling context.

25. The method of claim 23 or 24 wherein said stored dedicated service profile is a subscriber specific dedicated service profile stored in a home location register (HLR) (13) of a respective user equipment (11; 31).

26. The method of one of claims 23 to 25 wherein at least one of said values of service attributes defined by said stored dedicated service profile is stored in an serving gateway support node (SGSN) (12) of a UMTS network.

27. The method of claim 26 wherein at least another one of said values of service attributes defined by said dedicated service profile is stored in a radio network controller (RNC) of a UMTS network.

28. A network element (12,34) of a radio access network (32), comprising processing means for determining values or an indication of such values of service attributes defining the Quality of Service of a transmission to be used for a transmission requested by a user equipment (11,31) of a subscriber registered with some radio access network (37),
**characterized in that**
said processing means being adapted to determine said values or said indication of such values based on at least one provided common value of at least one service attribute for all subscribers that can be assigned to at least one kind of transmission and based on provided values of service attributes defined by a subscriber specific service profile (15).

29. The network element (12) of claim 28, wherein said user equipment (11) is registered with said radio access network to which said network element (12) belongs.

30. The network element (12) of claim 29, wherein said processing means select for a transmission requested by said user equipment (11) with an indication that said transmission is used for specific traffic provided values of at least one service attribute defined by a dedicated service profile.

31. The network element (12) of claim 30 wherein said transmission is a signaling context.

32. The network element (34) of claim 28, wherein in said radio access network (32) to which said network element (34) belongs, a user equipment (31) of a subscriber registered with some other radio access network (37) is allowed to request a transmission, and wherein said processing means being adapted to determine values or an indication of such values of service attributes to be used for a transmission requested by said user equipment (31) based on values of service attributes defined by a subscriber specific service profile received from the other radio access network (37) and based on said at least one common value of at least one service attribute.

33. A radio access network comprising a network element (12) according to one of claims 29 to 31 and storing means for storing subscriber specific service profiles (15) defining values of at least one service attribute that can be assigned to at least one kind of transmission.

34. The radio access network of claim 33 wherein said radio access network is a cellular network, wherein said storing means are integrated in a home location register or home subscriber server (HLR/HSS) (13) of said cellular network and wherein said network element (12) is a serving gateway support node (SGSN) (12) of said cellular network.

35. The radio access network of claim 33 or 34 comprising storing means for storing a dedicated service profile defining values of at least one service attribute, which values are selected by said processing means for a transmission requested by a user equipment (11) with an indication that said transmission is used for specific traffic.

36. A radio access network (32) in which a user equipment (31) of a subscriber registered with some other radio access network (37) is allowed to request a transmission, said radio access network (32) comprising a network element (34) according to claim 32.

37. The radio access network (32) of claim 36 wherein the processing means are designed for mapping values of service attributes determined based on values of service attributes as far as requested by a user equipment (31) for a requested transmission, on subscriber specific values of service attributes and on common values of service attributes, which service attributes are defined in the other radio access network (37), to values of service attributes defined in the radio access network of claim 36.

38. The radio access network (32) of claim 36 or 37 wherein said radio access network (32) is a wireless local area network (WLAN) and wherein storing means of said radio access (32) storing said provided common values of at least one service attribute and at least part of said processing means are integrated in a public access controller (PAC) (34) of said wireless local area network.

## Patentansprüche

1. Verfahren zur Zuweisung von Werten von Dienstattributen, die eine Dienstgüte einer Übermittlung definieren, zu Übermittlungen zwischen einem Nutzergerät (11, 31) und einem Funkzugangsnetzwerk (32), welches auf Anforderung einer solchen Übermittlung hin durch ein Nutzergerät (11, 31) eines Teilnehmers, der bei einem Funkzugangsnetzwerk (37) registriert ist, ein Bestimmen von Werten von Dienstattributen umfasst, die für die von dem besagten Nutzergerät (11, 31) angeforderte Übermittlung zu benutzen sind,
**dadurch gekennzeichnet, dass**
die besagten Werte von Dienstattributen, die für die Übermittlung benutzt werden sollen, basierend auf zumindest einem Wert von zumindest einem Dienstattribut, der durch ein gespeichertes, teilnehmerspezifisches Diensteprofil (15) definiert wird, und basierend auf zumindest einem gemeinsamen Wert von zumindest einem Dienstattribut für alle Teilnehmer, bestimmt werden.

2. Verfahren nach Anspruch 1, wobei die werte der Dienstattribute, die für die angeforderte Übermittlung benutzt werden sollen, darüber hinaus basierend auf Werten von Dienstattributen, die von dem Nutzergerät (11, 31) angefordert werden, bestimmt werden.

3. Verfahren nach Anspruch 1 oder 2, wobei die Werte der Dienstattribute, die durch ein teilnehmerspezifisches Diensteprofil (15) und durch die gemeinsamen Werte der Dienstattribute definiert sind, die Dienstgüte einer Übermittlung definieren.

4. Verfahren nach einem der vorherigen Ansprüche, wobei die werte der Dienstattribute, die durch ein teilnehmerspezifisches Diensteprofil (15) definiert sind, Minimalwerte und/oder Maximalwerte bestimmen, die für die Dienstattribute für zumindest eine Übermittlungsart, so wie sie durch das entsprechende Nutzergerät (11, 31) subskribiert wurde, zugelassen sind.

5. Verfahren nach einem der vorherigen Ansprüche, wobei die Werte der Dienstattribute in einem teilnehmerspezifischen Diensteprofil (15) zumindest einen Grundeinstellungswert für zumindest ein Dienstattribut umfassen, der in dem Falle zu benutzen ist, dass ein Nutzergerät (11, 31) eine Übermittlung anfordert, ohne einen spezifischen Wert für das besagte zumindest eine für die angeforderte Übermittlung benötigte Dienstattribut anzufordern.

6. Verfahren nach einem der vorherigen Ansprüche, wobei die Werte der Dienstattribute, die durch ein teilnehmerspezifisches Diensteprofil (15) definiert sind, die Werte von Dienstattributen umfassen, die die Dienstgüte für angeforderte Echtzeitverkehrübermittlungen definieren.

7. Verfahren nach einem der vorherigen Ansprüche, wobei die Werte der Dienstattribute, die durch ein teilnehmerspezifisches Diensteprofil (15) definiert sind, die Werte zumindest eines Dienstattributes umfassen, das zumindest ein Teil der Dienstgüte für angeforderte Nichtechtzeitverkehrübermittlungen definiert.

8. Verfahren nach einem der vorherigen Ansprüche, wobei im Falle, dass das besagte Nutzergerät (11, 31) einen Teil der Werte von Dienstattributen anfordert, die für eine angeforderte Übermittlung erforderlich sind, die Werte von Dienstattributen, die von einem teilnehmerspezifischen Diensteprofil (15) definiert sind, nur für die übrigen angeforderten Attributwerte benutzt werden, falls sie für die angeforderte Übermittlung geeignet sind, wenn die angeforderten Werte von Dienstattributen benutzt werden.

9. Verfahren nach einem der vorherigen Ansprüche, wobei die gemeinsamen Werte von Dienstattributen zumindest einen Grundeinstellungswert für zumindest ein Dienstattribut umfassen, der in dem Falle zu benutzen ist, dass ein Nutzergerät (11, 31) eine Übermittlung anfordert, ohne einen spezifischen Wert für das besagte zumindest eine Dienstattribut, das für die angeforderte Übermittlung erforderlich ist, anzufordern.

10. Verfahren nach Anspruch 9, wobei zumindest ein Grundeinstellungswert von zumindest einem Dienstattribut der besagten gemeinsamen Werte von Dienstattributen nur in dem Falle als Dienstattributwert für eine angeforderte Übermittlung benutzt wird, dass ein wert, der von dem teilnehmerspezifischen Profil (15) für das besagte Dienstattribut definiert wird, für die angeforderte Übermittlung nicht geeignet ist, wenn Werte von Dienstattributen benutzt werden, die von einem Nutzergerät (11, 31) angefordert werden, oder in dem Falle, dass kein Wert in dem teilnehmerspezifischen Profil (15) für das besagte Dienstattribut gespeichert ist.

11. Verfahren nach einem der vorherigen Ansprüche, wobei die gemeinsamen Werte von Dienstattributen einen Bereich von werten für zumindest ein Dienstattribut definieren, wobei das besagte Verfahren Folgendes umfasst: Das Anpassen eines Wertes für das besagte zumindest eine Dienstattribut, der von einem Nutzergerät (11, 31) angefordert wird und außerhalb des jeweiligen definierten Bereiches liegt, so dass er innerhalb des besagten Bereiches liegt.

12. Verfahren nach einem der vorherigen Ansprüche, wobei die gemeinsamen Werte von Dienstattributen einen Satz von Werten für zumindest ein Dienstattribut umfassen, wobei jeder Wert des besagten Satzes einem spezifischen Wert von zumindest einem anderen Dienstattribut zugewiesen ist, wobei das besagte Verfahren Folgendes umfasst: Das Auswählen eines Wertes für ein Dienstattribut, für das solch ein Satz zur Verfügung gestellt wird und für das von einem Nutzergerät (11, 31) kein Wert angefordert wird aus dem besagten Satz von Werten, gemäß dem wert von zumindest einem anderen Dienstattribut, der von dem besagten Nutzergerät (11, 31) angefordert wird, sofern vorhanden, in dem Falle, dass ein Wert, der in dem teilnehmerspezifischen Profil (15) für das besagte Dienstattribut gespeichert ist, für die angeforderte Übermittlung nicht geeignet ist, wenn der Wert des besagten zumindest einen anderen Dienstattributs, der von dem besagten Nutzergerät (11, 31) angefordert wird, benutzt wird, oder in dem Falle, dass für das besagte Dienstattribut in dem teilnehmerspezifischen Profil (15) kein Wert gespeichert ist.

13. Verfahren nach einem der vorherigen Ansprüche, wobei der besagte zumindest eine Wert von dem zumindest einen Dienstattribut, das von einem teilnehmerspezifischen Diensteprofil (15) definiert ist, in einem Speichermittel von einem ersten Netzwerkelement (13) eines Funkzugangsnetzwerks gespeichert ist, und wobei der besagte zumindest eine gemeinsame Wert von zumindest einem Dienstattribut in einem Speichermittel eines zweiten Netzwerkelements (12) des gleichen Funkzugangsnetzwerk gespeichert ist.

14. Verfahren nach Anspruch 13, wobei in dem besagten zweiten Netzwerkelement (12) zusätzlich Regeln gespeichert sind, zur Bestimmung von Werten von Dienstattributen, die für die von dem besagten Nutzergerät (11) angeforderte Übermittlung zu benutzen sind.

15. Verfahren nach einem der Ansprüche 1 bis 12, wobei der besagte zumindest eine Wert von zumindest einem Dienstattribut, der von einem teilnehmerspezifischen Diensteprofil (15) definiert ist, in einem Speichermittel eines Netzwerkelements (13) eines Funkzugangsnetzwerks gespeichert ist, und wobei der besagte zumindest eine gemeinsame Wert von zumindest einem Dienstattribut und/oder Regeln zur Bestimmung von Werten von Dienstattributen, die für die von dem Nutzergerät (11) angeforderten Übermittlung zu benutzen sind, von einem Betreiber des besagten Funkzugangsnetzwerk für jede angeforderte Übermittlung zur Verfügung gestellt werden.

16. Verfahren nach einem der Ansprüche 13 bis 15, wobei das besagte Funkzugangsnetzwerk ein UMTS-Funkkommunikationsnetzwerk ist.

17. Verfahren nach einem der Ansprüche 1 bis 12, wobei der besagte zumindest eine Wert von zumindest einem Dienstattribut, der von einem teilnehmerspezifischen Diensteprofil definiert ist, in einem Speichermittel eines ersten Funkzugangsnetzwerks (37) gespeichert ist, wobei der besagte zumindest eine gemeinsame Wert von zumindest einem Dienstattribut in einem zweiten Funkzugangsnetzwerk (32) verfügbar ist, wobei das besagte erste Funkzugangsnetzwerk (37) ein Netzwerk ist, für das ein Nutzergerät (31), welches eine Übermittlung anfordert, registriert ist, und wobei auf das besagte zweite Funkzugangsnetzwerk (32) von dem besagten Nutzergerät (31) zur Anforderung der Übermittlung zugegriffen wird.

18. Verfahren nach Anspruch 17, wobei der besagte zumindest eine gemeinsame Wert von zumindest einem Dienstattribut in einem Speichermittel des besagten zweiten Funkzugangsnetzwerks (32) gespeichert ist.

19. Verfahren nach Anspruch 17, wobei der besagte zumindest eine gemeinsame Wert von zumindest einem Dienstattribut von dem Betreiber des besagten zweiten Funkzugangsnetzwerks (37) für jede angeforderte Übermittlung zur Verfügung gestellt wird.

20. Verfahren nach einem der Ansprüche 17 bis 19, welches ferner Folgendes umfasst: Die Übermittlung der Werte von Dienstattributen, die von einem teilnehmerspezifischen Profil definiert sind, das in dem ersten Speichermittel gespeichert ist, von dem besagten ersten Funkzugangsnetzwerk (37) zu dem besagten zweiten Funkzugangsnetzwerk (32), während der Authentifizierung des besagten Nutzergeräts (31), das auf das besagte zweite Funkzugangsnetzwerk (32) zugreift.

21. Verfahren nach einem der Ansprüche 17 bis 20, wobei Werte von Dienstattributen, die für eine angeforderte Übermittlung in dem zweiten Funkzugangsnetzwerk (32) zu benutzen sind, bestimmt werden, indem Werte von Dienstattributen, die basierend auf Werten von Dienstattributen, soweit wie sie von einem Nutzergerät (31) für eine angeforderte Übermittlung angefordert werden, auf teilnehmerspezifischen Werten von Dienstattributen und auf gemeinsamen Werten von Dienstattributen bestimmt werden, wobei diese Dienstattribute in dem ersten Funkzugangsnetzwerk (37) definiert sind, auf Werte von Dienstattributen, die in dem zweiten Funkzugangsnetzwerk (32) definiert sind, gemappt werden.

22. verfahren nach einem der Ansprüche 17 bis 21, wobei das besagte zweite Funkzugangsnetzwerk (32) ein drahtloses lokales Netzwerk (WLAN = Wireless Local Area Network) ist.

23. Verfahren nach einem der vorherigen Ansprüche, welches in dem Falle, dass das besagte Nutzergerät (11, 31) eine Übermittlung mit einer Angabe, dass die besagte angeforderte Übermittlung für spezifischen Verkehr benutzt wird, anfordert, die Auswahl von Werten von Dienstattributen, die von einem gespeicherten dedizierten Diensteprofil definiert werden, als Werte von Dienstattributen, die für die besagte Übermittlung zu benutzen sind, umfasst.

24. Verfahren nach Anspruch 23, wobei die besagte angeforderte Übermittlung ein signalisierender Kontext ist.

25. Verfahren nach Anspruch 23 oder 24, wobei das besagte gespeicherte dedizierte Diensteprofil ein teilnehmerspezifisches dediziertes Diensteprofil ist, das in einem Home Location Register (HLR) (13) eines jeweiligen Nutzergeräts (11, 31) gespeichert ist.

26. verfahren nach einem der Ansprüche 23 bis 25, wobei zumindest einer der besagten Werte von Dienstattributen, die von dem besagten gespeicherten dedizierten Diensteprofil definiert werden, in einem Serving Gateway Support Node (SGSN) (12) eines UMTS-Netzwerks gespeichert ist.

27. Verfahren nach Anspruch 26, wobei ein anderer der besagten Werte von Dienstattributen, die von dem besagten dedizierten Diensteprofil definiert werden, in einer Funknetz-Steuereinrichtung (RNC = Radio Network Controller) eines UMTS-Netzwerks gespeichert ist

28. Netzwerkelement (12, 34) eines Funkzugangsnetzwerks (32), das Folgendes umfasst: Verarbeitungsmittel zur Bestimmung von Werten oder eines Hinweises auf solche Werte von Dienstattributen, die die Dienstgüte einer Übermittlung definieren, die für eine Übermittlung zu benutzen ist, die von einem Nutzergerät (11, 31) eines Teilnehmers, der bei einem Funkzugangsnetzwerk (37) registriert ist, angefordert wird, **dadurch gekennzeichnet, dass** das besagte Verarbeitungsmittel dazu angepasst ist, die besagten Werte oder den besagten Hinweis auf solche Werte zu definieren, basierend auf zumindest einem zur Verfügung gestellten gemeinsamen Wert von zumindest einem Dienstattribut für alle Teilnehmer, der zumindest einer Übermittlungsart zugewiesen werden kann, und basierend auf zur Verfügung gestellten Werten von Dienstattributen, die von einem teilnehmerspezifischen Diensteprofil (15) definiert werden.

29. Netzwerkelement (12) nach Anspruch 28, wobei das besagte Nutzergerät (11) bei dem besagten Funkzugangsnetzwerk registriert ist, zu dem das besagte Netzwerkelement (12) gehört.

30. Netzwerkelement (12) nach Anspruch 29, wobei die besagten Verarbeitungsmittel für eine von dem besagten Nutzergerät (11) angeforderte Übermittlung mit einer Angabe, dass die besagte Übermittlung für spezifischen Verkehr genutzt wird, zur Verfügung gestellte Werte von zumindest einem Dienstattribut, die durch ein dediziertes Diensteprofil definiert werden, auswählen.

31. Netzwerkelement (12) nach Anspruch 30, wobei die besagte Übermittlung ein signalisierender Kontext ist.

32. Netzwerkelement (34) nach Anspruch 28, wobei es bei dem besagten Funkzugangsnetzwerk (32), zu dem das besagte Netzwerkelement (34) gehört, einem Nutzergerät (31) eines Teilnehmers, der bei einem anderen Funkzugangsnetzwerk (37) registriert ist, gestattet ist, eine Übermittlung anzufordern, und wobei die besagten Verarbeitungsmittel dazu angepasst sind, Werte oder einen Hinweis auf solche Werte von Dienstattributen, die für eine von dem besagten Nutzergerät (31) angeforderte Übermittlung zu benutzen sind, zu bestimmen, basierend auf werten von Dienstattributen, die von einem teilnehmerspezifischen Diensteprofil definiert werden, das von dem anderen Funkzugangsnetzwerk (37) empfangen wird, und basierend auf dem besagten zumindest einen gemeinsamen Wert von zumindest einem Dienstattribut.

33. Funkzugangsnetzwerk, das Folgendes umfasst: Ein Netzwerkelement (12) gemäß einem der Ansprüche 29 bis 31 und Speichermittel zur Speicherung von teilnehmerspezifischen Diensteprofilen (15), die Werte von zumindest einem Dienstattribut definieren, die zumindest einer Übermittlungsart zugewiesen werden können.

34. Funkzugangsnetzwerk nach Anspruch 33, wobei das besagte Funkzugangsnetzwerk ein Mobilfunknetzwerk ist, wobei die besagten Speichermittel in einem Home Location Register oder einem Home Subscriber Server (HLR/HSS) (13) des besagten Mobilfunknetzwerks integriert sind, und wobei das besagte Netzwerkelement (12) ein Serving Gateway Support Node (SGSN) (12) des besagten Mobilfunknetzwerks ist.

35. Funkzugangsnetzwerk nach Anspruch 33 oder 34, das Speichermittel zur Speicherung eines dedizierten Diensteprofils umfasst, das Werte von zumindest einem Dienstattribut definiert, wobei die Werte von den besagten verarbeitungsmitteln für eine Übermittlung ausgewählt werden, die von einem Nutzergerät (11) angefordert wird, mit einer Angabe, dass die besagte Übermittlung für spezifischen Verkehr benutzt wird.

36. Funkzugangsnetzwerk (32), bei dem es einem Nutzergerät (31) eines Teilnehmers, der bei einem anderen Funkzugangsnetzwerk (37) registriert ist, gestattet ist, eine Übermittlung anzufordern, wobei das besagte Funkzugangsnetzwerk (32) ein Netzwerkelement (34) nach Anspruch 32 umfasst.

37. Funkzugangsnetzwerk (32) nach Anspruch 36, wobei die verarbeitungsmittel dazu ausgelegt sind, Werte von Dienstattributen, die basierend auf Werten von Dienstattributen, soweit wie sie von einem Nutzergerät (31) für eine angeforderte Übermittlung angefordert werden, auf teilnehmerspezifischen Werten von Dienstattributen und auf gemeinsamen Werten von Dienstattributen bestimmt werden, wobei die Dienstattribute in dem anderen Funkzugangsnetzwerk (37) definiert sind, zu Werten von Dienstattributen, die in dem Funkzugangsnetzwerk nach Anspruch 36 definiert sind, zu mappen.

38. Funkzugangsnetzwerk (32) nach Anspruch 36 oder 37, wobei das besagte Funkzugangsnetzwerk (32) ein drahtloses lokales Netzwerk (WLAN = Wireless Local Area Network) ist, und wobei die Speichermittel des besagten Funkzugangsnetzwerks (32) die besagten zur Verfügung gestellten gemeinsamen Werte von zumindest einem Dienstattribut speichern und wobei zumindest ein Teil der besagten Speichermittel in einem Public Access Controller (PAC) (34) des besagten drahtlosen lokalen Netzwerks integriert sind.

## Revendications

1. Procédé pour attribuer des valeurs d'attributs de service définissant la Qualité de Service d'une transmission à des transmissions entre un équipement utilisateur (11, 31) et un réseau d'accès radio (32), comprenant à la demande d'une telle transmission par un équipement utilisateur (11, 31) d'un abonné enregistré auprès de quelque réseau d'accès radio (37) la détermination de valeurs d'attributs de service devant être utilisées pour la transmission demandée par ledit équipement utilisateur (11, 31),
**caractérisé en ce que**
lesdites valeurs d'attributs de service qui doivent être utilisées pour la transmission sont déterminées sur la base d'au moins une valeur d'au moins un attribut de service définie par un profil de service spécifique à l'abonné stocké (15), et sur la base d'au moins une valeur commune d'au moins un attribut de service pour tous les abonnés.

2. Procédé selon la revendication 1, dans lequel les valeurs d'attributs de service devant être utilisées pour la transmission demandée sont déterminées en outre sur la base de valeurs d'attributs de service demandées par l'équipement utilisateur (11, 31).

3. Procédé selon la revendication 1 ou 2, dans lequel les valeurs d'attributs de service définies par un profil de service spécifique à l'abonné (15) et les valeurs d'attributs de service communes définissent la Qualité de Service d'une transmission.

4. Procédé selon une des revendications précédentes, dans lequel les valeurs d'attributs de service définies par un profil de service spécifique à l'abonné (15) définissent des valeurs minimum et/ou maximum autorisées pour les attributs de service pour au moins un type de transmission tel que souscrit par l'équipement utilisateur correspondant (11,31).

5. Procédé selon une des revendications précédentes, dans lequel les valeurs d'attributs de service dans un profil de service spécifique à l'abonné (15) comprennent au moins une valeur par défaut pour au moins un attribut de service devant être utilisée dans le cas où un équipement utilisateur (11, 31) demande une transmission sans demander une valeur spécifique pour ledit au moins un attribut de service requise pour la transmission demandée.

6. Procédé selon une des revendications précédentes, dans lequel les valeurs d'attributs de service définies par un profil de service spécifique à l'abonné (15) comprennent les valeurs d'attributs de service définissant la Qualité de Service pour des transmissions de trafic en temps réel demandées.

7. Procédé selon une des revendications précédentes, dans lequel les valeurs d'attributs de service définies par un profil de service spécifique à l'abonné (15) comprennent les valeurs d'au moins un attribut de service définissant au moins une partie de la Qualité de Service pour des transmissions de trafic en temps différé demandées.

8. Procédé selon une des revendications précédentes, dans lequel dans le cas où ledit équipement utilisateur (11, 31) demande une partie des valeurs d'attributs de service requises pour une transmission demandée, les valeurs d'attributs de service définies par un profil de service spécifique à l'abonné (15) sont seulement utilisées pour les valeurs d'attribut requises restantes si elles sont appropriées pour la transmission demandée lors de l'utilisation des valeurs d'attributs de service demandées.

9. Procédé selon une des revendications précédentes, dans lequel les valeurs d'attributs de service communes comprennent au moins une valeur par défaut pour au moins un attribut de service devant être utilisée dans le cas où un équipement utilisateur (11, 31) demande une transmission sans demander une valeur spécifique pour ledit au moins un attribut de service requise pour la transmission demandée.

10. Procédé selon la revendication 9, dans lequel au moins une valeur par défaut d'au moins un attribut de service desdites valeurs d'attributs de service communes est seulement utilisée comme valeur d'attribut de service pour une transmission demandée dans le cas où une valeur définie par le profil spécifique à l'abonné (15) pour ledit attribut de service n'est pas appropriée pour la transmission demandée lors de l'utilisation de valeurs d'attributs de service demandées par un équipement utilisateur (11, 31), ou dans le cas où aucune valeur n'est stockée dans le profil spécifique à l'abonné (15) pour ledit attribut de service.

11. Procédé selon une des revendications précédentes, dans lequel les valeurs d'attributs de service communes définissent une plage de valeurs pour au moins un attribut de service, ledit procédé comprenant l'ajustement d'une valeur pour ledit au moins un attribut de service demandée par un équipement utilisateur (11, 31) et se trouvant en dehors de la plage définie respective pour se trouver à l'intérieur de ladite plage.

12. Procédé selon une des revendications précédentes, dans lequel les valeurs d'attributs de service communes comprennent un ensemble de valeurs pour au moins un attribut de service, chaque valeur dudit ensemble étant attribuée à une valeur spécifique d'au moins un autre attribut de service, ledit procédé comprenant la sélection d'une valeur pour un attribut de service pour lequel un tel ensemble est fourni et pour lequel aucune valeur n'est demandée par un équipement utilisateur (11, 31) à partir dudit ensemble de valeurs selon la valeur d'au moins un autre attribut de service demandée par ledit équipement utilisateur (11, 31), le cas échéant, dans le cas où une valeur stockée dans le profil spécifique à l'abonné (15) pour ledit attribut de service n'est pas appropriée pour la transmission demandée lors de l'utilisation de la valeur dudit au moins un autre attribut de service demandée par ledit équipement utilisateur (11, 31), ou dans le cas où aucune valeur n'est stockée dans le profil spécifique à l'abonné (15) pour ledit attribut de service.

13. Procédé selon une des revendications précédentes, dans lequel ladite au moins une valeur d'au moins un attribut de service définie par un profil de service spécifique à l'abonné (15) est stockée dans des moyens de stockage d'un premier élément de réseau (13) d'un réseau d'accès radio, et dans lequel ladite au moins une valeur commune d'au moins un attribut de service est stockée dans des moyens de stockage d'un second élément de réseau (12) du même réseau d'accès radio.

14. Procédé selon la revendication 13, dans lequel dans ledit second élément de réseau (12) des règles sont stockées en plus pour déterminer des valeurs d'attributs de service devant être utilisées pour une transmission demandée par ledit équipement utilisateur (11).

15. Procédé selon une des revendications 1 à 12, dans lequel ladite au moins une valeur d'au moins un attribut de service définie par un profil de service spécifique à l'abonné (15) est stockée dans des moyens de stockage d'un élément de réseau (13) d'un réseau d'accès radio et dans lequel ladite au moins une valeur commune d'au moins un attribut de service et/ou des règles pour déterminer des valeurs d'attributs de service devant être utilisées pour la transmission demandée par ledit équipement utilisateur (11) sont fournies pour chaque transmission demandée par un opérateur dudit réseau d'accès radio.

16. Procédé selon une des revendications 13 à 15, dans lequel ledit réseau d'accès radio est un réseau de communications radio UMTS.

17. Procédé selon une des revendications 1 à 12, dans lequel ladite au moins une valeur d'au moins un attribut de service définie par un profil de service spécifique à l'abonné est stockée dans des moyens de stockage d'un premier réseau d'accès radio (37), dans lequel ladite au moins une valeur commune d'au moins un attribut de service est disponible dans un second réseau d'accès radio (32), ledit premier réseau d'accès radio (37) étant un réseau pour lequel un équipement utilisateur (31) demandant une transmission est enregistré et ledit second réseau d'accès radio (32) étant accédé par ledit équipement utilisateur (31) pour demander la transmission.

18. Procédé selon la revendication 17, dans lequel ladite au moins une valeur commune d'au moins un attribut de service est stockée dans des moyens de stockage dudit second réseau d'accès radio (32).

19. Procédé selon la revendication 17, dans lequel ladite au moins une valeur commune d'au moins un attribut de service est fournie pour chaque transmission demandée par l'opérateur dudit second réseau d'accès radio (32).

20. Procédé selon une des revendications 17 à 19, comprenant en outre la transmission des valeurs d'attributs de service définies par un profil de service spécifique à l'abonné stocké dans les premiers moyens de stockage dudit premier réseau d'accès radio (37) audit second réseau d'accès radio (32) durant une authentification dudit équipement utilisateur (31) accédant audit second réseau d'accès radio (32).

21. Procédé selon une des revendications 17 à 20, dans lequel des valeurs d'attributs de service devant être utilisées pour une transmission demandée dans le second réseau d'accès radio (32) sont déterminées en mappant des valeurs d'attributs de service déterminées sur la base de valeurs d'attributs de service telles que demandées par un équipement utilisateur (31) pour une transmission demandée, de valeurs d'attributs de service spécifiques à l'abonné et de valeurs d'attributs de service communes, lesquels attributs de service sont définis dans le premier réseau d'accès radio (37), à des valeurs d'attributs de service définies dans le second réseau d'accès radio (32).

22. Procédé selon une des revendications 17 à 21, dans lequel ledit second réseau d'accès radio (32) est un réseau local sans fil (WLAN).

23. Procédé selon une des revendications précédentes, comprenant, dans le cas où ledit équipement utilisateur (11,31) demande une transmission avec une indication selon laquelle ladite transmission demandée est utilisée pour un trafic spécifique, la sélection comme valeurs d'attributs de service devant être utilisées pour ladite transmission de valeurs d'attributs de service définies par un profil de service dédié stocké.

24. Procédé selon la revendication 23, dans lequel ladite transmission demandée est un contexte de signalisation.

25. Procédé selon la revendication 23 ou 24, dans lequel ledit profil de service dédié stocké est un profil de service dédié spécifique à l'abonné stocké dans un enregistreur de localisation nominal (HLR) (13) d'un équipement utilisateur respectif (11, 31).

26. Procédé selon une des revendications 23 à 25, dans lequel au moins une desdites valeurs d'attributs de service définies par ledit profil de service dédié stocké est stockée dans un noeud de support de passerelle de desserte (SGSN) (12) d'un réseau UMTS.

27. Procédé selon la revendication 26, dans lequel au moins une autre desdites valeurs d'attributs de service définies par ledit profil de service dédié est stockée dans un contrôleur de réseau radio (RNC) d'un réseau UMTS.

28. Elément de réseau (12, 34) d'un réseau d'accès radio (32), comprenant des moyens de traitement pour déterminer des valeurs ou une indication de telles valeurs d'attributs de service définissant la Qualité de Service d'une transmission devant être utilisées pour une transmission demandée par un équipement utilisateur (11, 31) d'un abonné enregistré auprès de quelque réseau d'accès radio (37),
**caractérisé en ce que**
lesdits moyens de traitement sont adaptés pour déterminer lesdites valeurs ou ladite indication de telles valeurs sur la base d'au moins une valeur commune fournie d'au moins un attribut de service pour tous les abonnés qui peut être attribuée à au moins un type de transmission et sur la base de valeurs d'attributs de service fournies définies par un profil de service spécifique à l'abonné (15).

29. Elément de réseau (12) selon la revendication 28, dans lequel ledit équipement utilisateur (11) est enregistré auprès dudit réseau d'accès radio auquel ledit élément de réseau (12) appartient.

30. Elément de réseau (12) selon la revendication 29, dans lequel lesdits moyens de traitement sélectionnent pour une transmission demandée par ledit équipement utilisateur (11) avec une indication selon laquelle ladite transmission est utilisée pour un trafic spécifique des valeurs fournies d'au moins un attribut de service définies par un profil de service dédié.

31. Elément de réseau (12) selon la revendication 30, dans lequel ladite transmission est un contexte de signalisation.

32. Elément de réseau (34) selon la revendication 28, dans lequel dans ledit réseau d'accès radio (32) auquel ledit élément de réseau (34) appartient, un équipement utilisateur (31) d'un abonné enregistré auprès de quelque autre réseau d'accès radio (37) est autorisé à demander une transmission, et dans lequel lesdits moyens de traitement sont adaptés pour déterminer des valeurs ou une indication de telles valeurs d'attributs de service devant être utilisées pour une transmission demandée par ledit équipement utilisateur (31) sur la base de valeurs d'attributs de service définies par un profil de service spécifique à l'abonné reçu de l'autre réseau d'accès radio (37) et sur la base de ladite au moins une valeur commune d'au moins un attribut de service.

33. Réseau d'accès radio comprenant un élément de réseau (12) selon une des revendications 29 à 31 et des moyens de stockage pour stocker des profils de service spécifiques à l'abonné (15) définissant des valeurs d'au moins un attribut de service qui peuvent être attribuées à au moins un type de transmission.

34. Réseau d'accès radio selon la revendication 33, dans lequel ledit réseau d'accès radio est un réseau cellulaire, dans lequel lesdits moyens de stockage sont intégrés dans un enregistreur de localisation nominal ou serveur d'abonnés résidentiels (HLR/HSS) (13) dudit réseau cellulaire et dans lequel ledit élément de réseau (12) est un noeud de support de passerelle de desserte (SGSN) (12) dudit réseau cellulaire.

35. Réseau d'accès radio selon la revendication 33 ou 34, comprenant des moyens de stockage pour stocker un profil de service dédié définissant des valeurs d'au moins un attribut de service, lesquelles valeurs sont sélectionnées par lesdits moyens de traitement pour une transmission demandée par un équipement utilisateur (11) avec une indication selon laquelle ladite transmission est utilisée pour un trafic spécifique.

36. Réseau d'accès radio (32) dans lequel un équipement utilisateur (31) d'un abonné enregistré auprès de quelque autre réseau d'accès radio (37) est autorisé à demander une transmission, ledit réseau d'accès radio (32) comprenant un élément de réseau (34) selon la revendication 32.

37. Réseau d'accès radio (32) selon la revendication 36, dans lequel les moyens de traitement sont conçus pour mapper des valeurs d'attributs de service déterminées sur la base de valeurs d'attributs de service telles que demandées par un équipement utilisateur (31) pour une transmission demandée, de valeurs d'attributs de service spécifiques à l'abonné et de valeurs d'attributs de service communes, lesquels attributs de service sont définis dans l'autre réseau d'accès radio (37), à des valeurs d'attributs de service définies dans le réseau d'accès radio de la revendication 36.

38. Réseau d'accès radio (32) selon la revendication 36 ou 37, dans lequel ledit réseau d'accès radio (32) est un réseau local sans fil (WLAN) et dans lequel des moyens de stockage dudit réseau d'accès radio (32) stockant lesdites valeurs communes fournies d'au moins un attribut de service et au moins une partie desdits moyens de traitement sont intégrés dans un contrôleur d'accès public (PAC) (34) dudit réseau local sans fil.
